# EUROPÄISCHE PATENTSCHRIFT

(11) **EP 3 302 178 B1**
(45) Veröffentlichungstag und Bekanntmachung des Hinweises auf die Patenterteilung: **25.03.2020**
(21) Anmeldenummer: 15739324.0
(22) Anmeldetag: 27.05.2015
(51) Int. Cl.: A47C 20/12, A47B 9/20, F16C 29/02, F16C 41/00, F16C 33/20

(54) **TELESKOPIERBARE SÄULE MIT GLEITELEMENTEN**
TELESCOPIC COLUMN HAVING SLIDING ELEMENTS
COLONNE TÉLESCOPIQUE MUNIE D'ÉLÉMENTS DE GLISSEMENT

(43) Veröffentlichungstag der Anmeldung: 11.04.2018
(73) Patentinhaber: Steelcase Inc., Grand Rapids, MI 49508-7594 (US)
(72) Erfinder: PREISS, Jürgen, 83064 Raubling (DE)
(74) Vertreter: Flach Bauer Stahl Patentanwälte Partnerschaft mbB
(86) Internationale Anmeldenummer: PCT/IB2015/001095
(87) Internationale Veröffentlichungsnummer: WO 2016/189346

(56) Entgegenhaltungen:
- DE-A1-102009 042 197
- DE-U1- 8 634 267
- DE-U1- 20 015 831
- DE-U1-202007 014 791
- GB-A- 2 508 914
- US-A1- 2006 288 579

## Beschreibung

Die Erfindung betrifft eine teleskopierbare Säule mit Gleitelementen, wie sie insbesondere bei Möbeln, bevorzugt bei Tischen oder Stühlen eingesetzt wird.

Derartige teleskopierbare Säulen dienen insbesondere dazu, die Möbelstücke höhenverstellbar zu gestalten. Dadurch kann beispielsweise bei Tischen die Höhe in kurzer Zeit auf die Arbeitshöhe des Benutzers angepasst werden. Die hierzu eingesetzten teleskopierbaren Säulen bestehen aus mehreren ineinander verschiebbaren Elementen, die nachfolgend als Rohre bezeichnet werden. Ein Innenrohr ist dabei gegenüber einem Außenrohr in Längsrichtung verschiebbar.

Auf diese Art und Weise höhenverstellbare Möbelstücke müssen allerdings weiterhin derart komfortabel gestaltet sein, dass diese, auch in ihrer höchsten Position, stabil stehen und dem Benutzer nicht das Gefühl vermitteln, dass diese quer und längs zur Ausfahrrichtung bewegbar sind, also wackeln. Außerdem sollen die Möbelstücke möglichst nur mit einer minimalen Kraftanstrengung ausgefahren werden können. Dadurch können kleinere Motoren verwendet werden. Auch ein Verzicht auf derartige Motoren ist möglich.

Damit das Spiel der teleskopierbaren Säule quer und längs zur Ausfahrrichtung möglichst gering gehalten wird, werden Gleitelemente eingesetzt, die zwischen den einzelnen Elementen der teleskopierbaren Säule, also zwischen den einzelnen Rohren angeordnet sind. Als problematisch erweisen sich allerdings Herstellungstoleranzen der einzelnen Teleskoprohre. Diese können hinsichtlich ihres Innen- und/oder Außendurchmessers von der gewünschten Größe abweichen. Außerdem muss mit Toleranzen bei der Materialdicke gerechnet werden. Um dennoch eine spielfreie Anordnung der einzelnen Rohre gewährleisten zu können, werden Gleitelemente mit unterschiedlicher Dicke eingesetzt. Diese werden sooft durchgetauscht, bis das Spiel der einzelnen Rohre entsprechend reduziert ist. Dieser Verfahrensschritt ist allerdings sehr aufwendig und es ist ein Vorrat an unterschiedlich dicken Gleitelementen notwendig.

Aus der DE 86 34 267 U1 ist ein Höhenverstellmechanismus für Büromöbel, wie beispielsweise Tische bekannt. Der Tisch umfasst eine telekopierbare Säule gemäß des Oberbegriffs des Anspruchs 1, wobei an einem Innenrohr Gleitstücke befestigt sind. Eine Passung der Gleitelemente wird dadurch erreicht, dass die Gleitstücke in der erforderlichen Dicke hergestellt sind oder auf die gewünschte Dicke abgeschliffen werden.

Die DE 10 2009 042 197 A1 beschreibt ein Gleitelement für eine Teleskopführung. Dieses Gleitelement ist zwischen dem Innenrohr und dem Außenrohr eingesetzt. Das Gleitelement weist wenigstens eine Gleitfläche auf, auf der ein Führungselement der Teleskopführung bewegbar ist. Das Gleitelement umfasst außerdem eine Vertiefung, in der Schmiermittel vorhaltbar ist.

In der GB 2 508 914 A ist eine Anlaufscheibe für ein Gleitlager beschrieben. Die Anlaufscheibe umfasst ein Substrat, auf dem eine Kunststoffschicht angeordnet ist. In dieser ist zumindest eine Nut eingebracht, über die Öl verteilt wird.

Aus der DE 200 15 831 U1 ist ein teleskopierbarer Linearantrieb mit einem Außenrohr bekannt, wobei einstellbare Gleitschuhe verwendet werden, die an der Außenwand des Innenrohrs angebracht werden. Diese einstellbaren Gleitschuhe bestehen aus zwei Elementen, wobei ein Element wie ein Keil in das andere eingreift. Mittels einer Schraubverbindung kann dieser Gleitschuh nachjustiert werden. Das keilförmige Element greift je nach Einstellung mehr oder weniger stark in das andere Element des Gleitschuhs ein. Dadurch kann die Dicke des Gleitschuhs nachträglich den Bedürfnissen angepasst werden.

Nachteilig an dieser bekannten Vorveröffentlichung ist, dass die Montage und insbesondere die notwendige Feineinstellung sehr zeitaufwendig sind.

Es ist daher Aufgabe der vorliegenden Erfindung, eine teleskopierbare Säule zu schaffen, die zumindest zwei ineinander verschiebbare Rohre beinhaltet, wobei ein Spiel quer und längs zur Ausfahrrichtung durch Gleitelemente, die zwischen einem Innen- und einem Außenrohr eingesetzt werden, gering gehalten werden soll, wobei die Montage möglichst schnell und einfach erfolgen soll.

Die Aufgabe wird hinsichtlich der teleskopierbaren Säule durch die Merkmale des unabhängigen Anspruchs 1 gelöst. In den Ansprüchen 11, 12 und 14 werden Verfahren zur Herstellung eines maßgefertigten Gleitelements für die teleskopierbare Säule beschrieben. In den Unteransprüchen sind vorteilhafte Weiterbildungen der erfindungsgemäßen teleskopierbaren Säule und der erfindungsgemäßen Verfahren zur Herstellung des maßgefertigten Gleitelements für eine teleskopierbare Säule beschrieben.

Die erfindungsgemäße teleskopierbare Säule weist ein Außenrohr und zumindest ein erstes Innenrohr auf, wobei das zumindest eine erste Innenrohr gegenüber dem Außenrohr teleskopartig verfahrbar ist. Das zumindest eine erste Innenrohr ist dabei mit einer Gleitlagerung ausgestattet. Die Gleitlagerung umfasst dabei einen ersten Gleitsatz, der mehrere Gleitelemente aufweist, die zwischen dem ersten Innenrohr und dem Außenrohr in Umfangsrichtung an der Außenwandung des ersten Innenrohrs angeordnet sind. Darüber sind die beiden Rohre, also das Außenrohr und das zumindest eine erste Innenrohr gegeneinander längsverschiebbar geführt. Die Gleitelemente des ersten Gleitsatzes sind außerdem an dem ersten Innenrohr befestigt oder angebracht. Die Gleitelemente des ersten Gleitsatzes weisen Gleitflächen auf, die dabei in Kontakt mit der Innenwandung des Außenrohrs stehen. Zumindest einige oder alle der Gleitelemente sind maßgefertigt und weisen eine auf eine vorgegebene Materialdicke hin
a) abgearbeitete, abgefräste und/oder abgeschliffene Auflage- und/oder Gleitfläche, oder
b) durch Auftragen einer oder mehrerer Materialschichten z.B. mittels eines 3D-Druckers gegenüber der Ausgangssituation dickere Auflage- und/oder Gleitfläche auf,
wobei die vorgegebene Materialdicke derart gewählt ist, dass das Bewegungsspiel des ersten Innenrohrs gegenüber dem Außenrohr unterhalb eines Schwellwerts liegt, bzw. vorzugsweise spielfrei ist.

Vorteilhaft dabei ist, dass die Gleitelemente maßgefertigt sind, was bedeutet, dass sie genau die Materialdicke aufweisen, damit das erste Innenrohr noch in das Außenrohr einfahrbar ist, aber auch nicht zu dünn sind, wodurch die teleskopierbare Säule ins Wackeln geraten würde. Unter maßgefertigt wird weiterhin verstanden, dass die einzelnen Gleitelemente sich bzgl. ihrer jeweiligen Materialdicke voneinander unterscheiden können. Dies gelingt insbesondere dadurch, dass es sich bei den Gleitelementen um Frästeile oder Druckteile aus einem dreidimensionalen Druckprozess (3D-Drucker) handelt, deren Materialdicke bereits im Vorfeld derart eingestellt ist, dass sie - bezogen auf den Verfahrweg des zumindest ersten Innenrohrs gegenüber dem Außenrohr - dem minimalen Abstand zwischen der ihnen zugedachten Montageposition an der Umfangswandung des ersten Innenrohrs und der Innenwandung des Außenrohrs entspricht. Für den Fall, dass das erste Innenrohr gegenüber dem Außenrohr beispielsweise um 50 cm verfahren werden kann, bedeutet dies, dass die Montageposition, an der jedes der Gleitelemente des ersten Gleitsatzes angeordnet werden kann, um ebenfalls 50 cm in Längsrichtung gegenüber der Innenwandung des Außenrohrs verfahren werden kann. Innerhalb dieser Verfahrstrecke kann sich der Abstand zwischen der Montageposition am ersten Innenrohr und der Außenwandung des Außenrohrs verändern.

Gegenüber allen Material abtragenden Verfahren wie z. B. Fräsen, Schleifen, Drehen, Bohren hat ein schichtweiser Materialaufbau wie z.B. das 3D-Drucken den Vorteil, dass ein Materialverlust entfällt. Meist ist der Vorgang auch energetisch günstiger, weil das Material nur einmal in der benötigten Größe und Masse aufgebaut wird.

Für den Fall, dass der minimale Abstand 1 mm, der maximale Abstand 1,5 mm beträgt, sollte die Materialdicke des entsprechenden Gleitelements auf 1 mm, vorzugsweise knapp unter 1 mm festgesetzt werden. Die Materialdicke sollte vorzugsweise um weniger als 1%, bevorzugt um weniger als 0,5%, weiter bevorzugt um weniger als 0,1% kleiner sein, als der minimale Abstand innerhalb des Verfahrwegs zwischen der Montageposition an dem ersten Innenrohr und der Innenwandung an dem Außenrohr.

Es ist auch möglich, dass zwar der Abstand zwischen einer Montageposition für ein Gleitelement bezogen auf den gesamten Verfahrweg gleich bleibt, sich allerdings die Abstände der verschiedenen Montagepositionen der einzelnen Gleitelemente untereinander hinsichtlich der jeweiligen Außenwandung ändert. In diesem Fall unterscheidet sich dennoch die Materialdicke der einzelnen maßgefertigten Gleitelemente voneinander.

Erfindungsgemäß weist das erste Innenrohr in Umfangsrichtung mehrere in einer ersten Reihe voneinander beabstandete Kodieröffnungen auf. Zumindest einige der Kodieröffnungen der ersten Reihe unterscheiden sich in ihrer Form und/oder Größe voneinander. Zumindest einige der maßgefertigten Gleitelemente des ersten Gleitsatzes sind mit Kodiervorsprüngen versehen. Die Kodiervorsprünge der Gleitelemente korrespondieren hinsichtlich ihrer Form, Größe und/oder der Möglichkeit, in zugeordnete Kodieröffnungen einführbar zu sein, mit der Form und/oder Größe der jeweiligen Kodieröffnungen der ersten Reihe derart, dass die Gleitelemente des ersten Gleitsatzes nur an den ihnen zugedachten Montagepositionen in Umfangsrichtung an der Außenwandung des ersten Innenrohrs befestigbar oder befestigt sind.

Dadurch wird sichergestellt, dass einzig diejenigen Gleitelemente an der jeweiligen Position eingesetzt werden können, die den entsprechend zu der Kodieröffnung korrespondierenden Kodiervorsprung aufweist. Diese Gleitelemente sind dabei hinsichtlich ihrer Materialdicke entsprechend vorangepasst, so dass sie an ihrer angedachten Montageposition dem Abstand zwischen der Außenwandung des ersten Innenrohrs und der Innenwandung des Außenrohrs entsprechen. Die Montage kann dabei schnell erfolgen. Eine weitere Einstellung der Gleitelemente ist außerdem nicht notwendig.

Um das Spiel des Außenrohrs und des zumindest ersten Innenrohrs noch weiter zu reduzieren, sind in Längsrichtung beabstandet zu den in Umfangsrichtung angeordneten Kodieröffnungen der ersten Reihe weitere in Umfangsrichtung angeordnete Kodieröffnungen in zumindest einer zweiten Reihe ausgebildet. Einige der Kodieröffnungen der zweiten Reihe unterscheiden sich in ihrer Form und/oder Größe voneinander. Ein zweiter Gleitsatz, der mehrere Gleitelemente aufweist, die zwischen dem ersten Innenrohr und dem Außenrohr in Umfangsrichtung an der Außenwandung des ersten Innenrohrs angeordnet sind, ist ebenfalls ausgebildet. Zumindest einige der Gleitelemente des zweiten Gleitsatzes sind ebenfalls mit Kodiervorsprüngen versehen, die hinsichtlich ihrer Form, Größe und/oder der Möglichkeit, in zugeordnete Kodieröffnungen einführbar zu sein, mit der Form und/oder Größe der jeweiligen Kodieröffnungen der zweiten Reihe derart korrespondieren, dass die Gleitelemente des zweiten Gleitsatzes nur an den ihnen zugedachten Positionen in Umfangsrichtung an der Außenwandung des ersten Innenrohr befestigbar oder befestigt sind.

Dadurch kann ein Wackeln der teleskopierbaren Säule im ausgefahrenen Zustand weiter vermieden werden.

Dabei weisen einige der jeweils in Längsrichtung versetzt zueinander liegenden Kodieröffnungen der ersten und zweiten Reihe die gleiche Form und/oder Größe auf. Dies gilt insbesondere für diejenigen Kodieröffnungen, die zwar längsversetzt, aber dennoch an der gleichen Seitenfläche angeordnet sind. In diesem Fall weisen die Gleitelemente vorzugsweise die gleiche Materialdicke auf, so dass es egal ist, in welche der beiden Kodieröffnungen diese eingesetzt werden. Es ist auch möglich, dass einige der Kodieröffnungen der ersten Reihe sich in ihrer Form und/oder Größe von der Form und/oder Größe der Kodieröffnungen der zweiten Reihe unterscheiden.

Vorteilhaft ist ebenfalls, wenn die Gleitelemente des ersten und/oder zweiten Gleitsatzes zumindest zwei Befestigungsvorsprünge aufweisen, die in korrespondiere Befestigungsöffnungen in dem ersten Innenrohr greifen. Dadurch können die Gleitelemente auf das erste Innenrohr aufgeclipst werden. Die Befestigungsvorsprünge der Gleitelemente können auch Teil der Kodiervorsprünge sein.

Bevorzugt unterscheiden sich die Gleitelemente des ersten Gleitsatzes in Draufsicht durch zumindest ein erstes Unterscheidungsmerkmal voneinander. Unter "Draufsicht" ist eine Draufsicht auf die Gleitfläche gemeint. Gleiches kann auch für die Gleitelemente des zweiten Gleitsatzes gelten. Die Gleitelemente des ersten Gleitsatzes können sich in Draufsicht auch von den Gleitelementen des zweiten Gleitsatzes durch zumindest ein zweites Unterscheidungsmerkmal voneinander unterscheiden. Bei dem ersten Unterscheidungsmerkmal kann es sich beispielsweise um eine Farbe oder um ein Zeichen handeln, vorzugsweise um eine Nummer oder einen Buchstaben oder ein Ornament, die in die Gleitfläche der Gleitelemente des ersten und/oder zweiten Gleitsatzes eingespritzt, eingefräst oder eingeätzt sind. Bei dem zweiten Unterscheidungsmerkmal kann es sich bevorzugt noch zusätzlich um eine andere Form des Gleitelements ans sich, wie beispielsweise um einen abstehenden Flügel handeln, der an den Gleitelementen des ersten oder zweiten Gleitsatzes ausgebildet ist.

Das Außenrohr und das erste Innenrohr weisen beispielsweise einen runden Querschnitt auf, wobei die Gleitelemente des ersten und/oder zweiten Gleitsatzes in Umfangsrichtung gleichmäßig verteilt an der Außenwandung des erste Innenrohrs angeordnet sind. Es ist auch möglich, dass das Außenrohr und das erste Innenrohr einen n-eckigen Querschnitt mit n ≥ 3, bevorzugt n ≥ 4 aufweisen, wobei an jeder der n Seitenflächen des ersten Innenrohrs in Umfangsrichtung zumindest ein Gleitelement des ersten und/oder zweiten Gleitsatzes, vorzugsweise zwei oder mehr in Umfangsrichtung versetzt zueinander liegende Gleitelemente des ersten und/oder zweiten Gleitsatzes angeordnet sind.

Die Gleitelemente des ersten und/oder zweiten Gleitsatzes, die an verschiedenen aneinander angrenzenden Seitenflächen angeordnet sind, weisen eine unterschiedliche Materialdicke auf, wobei die Gleitelemente des ersten und/oder des zweiten Gleitsatzes, die an verschiedenen parallel zueinander verlaufenden Seitenflächen angeordnet sind, die gleiche Materialdicke aufweisen. Dadurch kann die Anzahl der Gleitelemente mit unterschiedlichen Materialdicken eines Gleitsatzes möglichst gering gehalten werden, wobei dennoch eine bewegungsspielfreie Lagerung des ersten Innenrohrs innerhalb des Außenrohrs möglich ist. Außerdem ist das erste Innenrohr zentriert innerhalb des Außenrohrs geführt.

Im Gegensatz dazu, weisen bevorzugt die Gleitelemente des ersten und/oder zweiten Gleitsatzes, die an verschiedenen, vorzugsweise nicht parallelen Seitenflächen angeordnet sind, eine unterschiedliche Materialdicke auf.

Bevorzugt sind zwei an zwei benachbarten, also unmittelbar aneinander angrenzenden Seitenflächen angeordnete Gleitelemente des ersten Gleitsatzes Teil eines gemeinsamen Gleitwinkels. Dies gilt auch für zwei an zwei benachbarten Seitenflächen angeordnete Gleitelemente des zweiten Gleitsatzes, die Teil eines gemeinsamen Gleitwinkels des zweiten Gleitsatzes sind. Ein solcher Gleitwinkel erleichtert die Montage nochmals, weil der Einsatz eines Gleitwinkels den Einsatz von zwei getrennten Gleitelementen ersetzt. Bevorzugt sind sowohl die Gleitwinkel des ersten Gleitsatzes, als auch die Gleitwinkel des zweiten Gleitsatzes einteilig ausgebildet. Der erste Gleitsatz, wie auch der zweite Gleitsatz bestehen aus n Gleitwinkeln, wobei das Außenrohr und das zumindest eine erste Innenrohr einen n-eckigen Querschnitt aufweisen.

Dabei weisen der Gleitwinkel des ersten Gleitsatzes und der des zweiten Gleitsatzes zwei Schenkel auf, wobei die beiden Schenkelinnenflächen an zwei benachbarten Seitenflächen des zumindest einen ersten Innenrohrs anliegen. Dabei ist an einer oder beiden Schenkelinnenflächen der Kodiervorsprung ausgebildet. An beiden Schenkelaußenflächen ist dabei die jeweils eine Gleitfläche ausgebildet. Aufgrund des Einsatzes eines Gleitwinkels kann die Anzahl der Kodieröffnungen und damit die Anzahl der Kodiervorsprünge reduziert werden, wobei dennoch eine ordnungsgemäße Montage des Gleitwinkels sichergestellt ist.

Die teleskopierbare Säule kann ebenfalls noch zumindest ein zweites Innenrohr aufweisen, dessen Durchmesser kleiner ist als der Durchmesser des ersten Innenrohrs. Das zweite Innenrohr weist die gleiche Gleitlagerung auf wie das erste Innenrohr, wobei die Materialdicke der einzelnen Gleitelemente auf den Abstand zwischen dem zweiten Innenrohr und dem ersten Innenrohr abgestimmt ist, so dass ein Bewegungsspiel des zweiten Innenrohrs zum ersten Innenrohr in Querrichtung über den gesamten Verfahrweg der teleskopierbaren Säule unterhalb eines definierten Schwellwerts liegt, vorzugsweise spielfrei ist.

Das erfindungsgemäße Verfahren zur Herstellung des maßgefertigten Gleitelements umfasst die nachfolgenden Verfahrensschritte. In einem ersten Verfahrensschritt wird ein Innenmaß des Außenrohrs vorzugsweise über den Verfahrweg des ersten Innenrohrs erfasst. Der Verfahrweg beschränkt sich insbesondere auf die Montageposition, an denen die Gleitelemente des ersten und/oder zweiten Gleitsatzes an der Innenwandung des Außenrohrs anliegen.

Vor oder nach dem ersten Verfahrensschritt wird der zweite Verfahrensschritt ausgeführt. Im zweiten Verfahrensschritt wird ein Außendurchmesser, bzw. Außenmaß des ersten Innenrohrs, vorzugsweise an den Stellen, an denen die Gleitelemente des ersten und/oder zweiten Gleitsatzes montiert werden, erfasst. Es ist auch möglich, dass der Außendurchmesser, bzw. das Außenmaß des Innenrohrs über die Länge erfasst wird, in der das Innenrohr in das Außenrohr eintaucht.

In einem dritten Verfahrensschritt wird der Abstand zwischen dem Außenrohr und dem Innenrohr für jede Montageposition eines Gleitelements an der Umfangswandung des ersten Innenrohrs berechnet. Dieser Abstand kann für jede Montageposition - bezogen auf den Verfahrweg - konstant sein oder er kann sich ändern. Für den Fall, dass sich der Abstand für eine Montageposition über den Verfahrweg ändert, wird der minimale Abstand gespeichert. Weiterhin kann der Abstand für die verschiedenen Montagepositionen der einzelnen Gleitelemente, die an verschiedenen Seitenflächen des ersten Innenrohrs angebracht sind, unterschiedlich sein.

In einem vierten Verfahrensschritt wird die Materialdicke der Gleitelemente des ersten und/oder zweiten Gleitsatzes angepasst. Dies kann durch Abtragen der Materialschicht erfolgen, bis die Gleitelemente des ersten und/oder zweiten Gleitsatzes eine Materialdicke aufweisen, die sicherstellt, dass das Innenrohr gegenüber dem Außenrohr über den Verfahrweg spielfrei angeordnet ist, wenn die Gleitelemente auf den für sie vorbestimmten Positionen an der Umfangsfläche am ersten Innenrohr angeordnet sind. Eine andere Möglichkeit wäre, dass die Materialdicke, beispielsweise durch einen dreidimensionalen Druckprozess (3D-Drucker) schichtweise aufgebaut wird.

Im Verfahrensschritt "Anpassen" wird die Materialdicke der Gleitelemente auf einen Zielwert reduziert, bzw. auf einen solchen Zielwert hin aufgebaut. Dieser Zielwert ist der minimale Abstand zwischen der Außenwand des Innenrohrs an der Montageposition des entsprechenden Gleitelements zu der angrenzenden Innenwand des Außenrohrs über den gesamten Verfahrweg des ersten Innenrohrs zum Außenrohr.

Im Verfahrensschritt Erfassen des Innendurchmessers wird der Innendurchmesser mittels eines kapazitiven oder induktiven Messsystems oder mit einer Lasereinheit erfasst, wobei das kapazitive oder induktive Messsystem oder die Lasereinheit in das Außenrohr eingetaucht wird.

Weiterhin wird die Summe der Materialdicke von zwei Gleitelementen, die an zwei parallel zueinander liegenden Seitenflächen des Innenrohrs angebracht werden, im Verfahrensschritt "Anpassen" auf einen Zielwert reduziert, bzw. auf einen solchen Zielwert hin aufgebaut, wobei der Zielwert der Summe des kleinsten Abstandes der beiden parallel zueinander liegenden Seitenflächen des Innenrohrs hin zu der jeweiligen Innenfläche des Außenrohr über den Verfahrweg entspricht. Dabei ist bevorzugt die Materialdicke von zwei Gleitelementen, die an zwei parallel zueinander liegenden Seitenflächen des Innenrohrs angebracht sind, gleich groß. Dadurch kann die Vielzahl von Gleitelementen, die unterschiedlich dick sind, reduziert werden.

Die Kodiervorsprünge eines Gleitelements können entweder direkt im Verfahrensschritt "Anpassen" innerhalb des Fräsprozesses herausgearbeitet oder mittels eines dreidimensionalen Druckprozesses aufgebaut werden, oder sie können in einem separaten Verfahrensschritt "Spritzgussgießen" mittels eines Spritzgussverfahrens zusammen mit dem Gleitelement an sich direkt einteilig hergestellt werden.

Schließlich wird im Verfahrensschritt "Einstellen" die Materialdicke der beiden Schenkelflächen der Gleitelemente in Form eines Gleitwinkels mittels eines Fräsprozesses unter Verwendung eines Prismenfräsers gleichzeitig auf den gewünschten Zielwert reduziert.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figur 1:: eine räumliche Darstellung der erfindungsgemäßen teleskopierbaren Säule im teilweise montierten Zustand, die aus drei Rohren besteht, wobei die Innenrohre die erfindungsgemäße Gleitlagerung aufweisen;
- Figur 2:: eine weitere räumliche Darstellung der erfindungsgemäßen teleskopierbaren Säule im teilweise montierten Zustand, ein erstes Innenrohr die erfindungsgemäße Gleitlagerung aufweist;
- Figur 3:: eine zweidimensionale Darstellung eines Gleitelements mit einem Kodiervorsprung;
- Figur 4A:: eine räumliche Darstellung von Gleitelementen in Form von Gleitwinkeln eines ersten Gleitsatzes in Draufsicht;
- Figur 4B:: eine räumliche Darstellung von Gleitelementen in Form von Gleitwinkeln eines zweiten Gleitsatzes in Draufsicht;
- Figur 5A:: eine räumliche Darstellung von Gleitelementen in Form von Gleitwinkeln eines ersten Gleitsatzes in Rückansicht;
- Figur 5B:: eine räumliche Darstellung von Gleitelementen in Form von Gleitwinkeln eines zweiten Gleitsatzes in Rückansicht;
- Figur 5C:: verschiedene Querschnittsformen der Kodieröffnungen und/oder der Kodiervorsprünge;
- Figur 6:: eine räumliche Darstellung eines Längsschnitts durch die erfindungsgemäße teleskopierbare Säule im montierten Zustand, die ein Außenrohr, sowie ein erstes und zweites Innenrohr aufweist;
- Figur 7A, 7B:: verschiedene zweidimensionale Darstellungen eines Längsschnitts durch die erfindungsgemäße teleskopierbare Säule im montierten Zustand, die ein Außenrohr, sowie ein erstes und zweites Innenrohr aufweist in verschiedenen Ausfahrhöhen der Säule;
- Figur 8:: eine räumliche Darstellung eines Außenrohrs, dessen Innendurchmesser über eine Messeinrichtung, die in das Außenrohr eingefahren wird, gemessen wird;
- Figur 9A, 9B:: verschiedene räumliche Darstellungen des Außenrohrs und einer Messeinrichtung, die nicht oder teilweise in das Außenrohr eingelassen wurde; und
- Figur 10:: ein Flussdiagramm, welches die Herstellung eines individuell angepassten Gleitelements für eine teleskopierbare Säule erläutert.

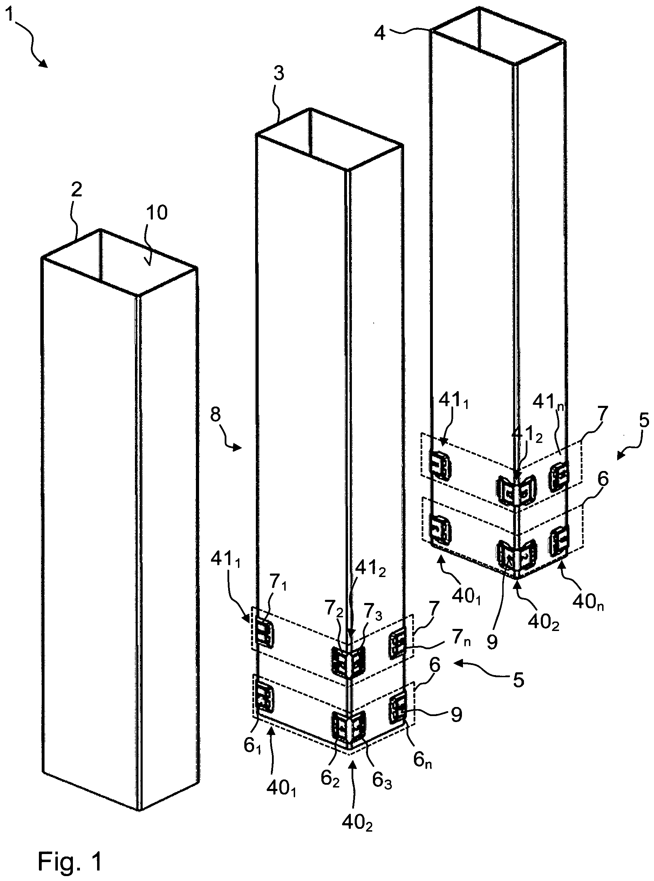

Figur 1 zeigt eine räumliche Darstellung der erfindungsgemäßen teleskopierbaren Säule 1 in teilweise montiertem Zustand. Die teleskopierbare Säule 1 besteht in diesem Ausführungsbeispiel aus drei Rohren 2, 3, 4, wobei an zwei dieser Rohren 3, 4 die erfindungsgemäße Gleitlagerung 5 angebracht ist. Die Säulen 2, 3, 4 unterscheiden sich in ihrem Innen- sowie ihrem Außendurchmesser. Bei der Säule 2 mit dem größten Innen- und Außendurchmesser handelt es sich um die Außensäule 2. In die Außensäule 2 wird eine erste Innensäule 3 eingeführt. In die erste Innensäule 3 wird eine zweite Innensäule 4 einsetzt. Das erste Innenrohr 3 ist gegenüber dem Außenrohr 2 teleskopartig verfahrbar. Das Gleiche gilt auch für das zweite Innenrohr 4. Das erste Innenrohr 3 weist einen ersten Gleitsatz 6 auf, der mehrere Gleitelemente 6₁, 6₂, ..., 6ₙ aufweist. Die mehreren Gleitelemente 6₁, 6₂, ..., 6ₙ sind zwischen dem ersten Innenrohr 3 und dem Außenrohr 2 in Umfangsrichtung an der Außenwandung 8 des ersten Innenrohrs 3 angeordnet. Die Gleitelemente 6₁, 6₂, ..., 6ₙ des ersten Gleitsatzes 6 weisen Gleitflächen 9 auf, die in Kontakt mit der Innenwandung 10 des Außenrohrs 2 stehen.

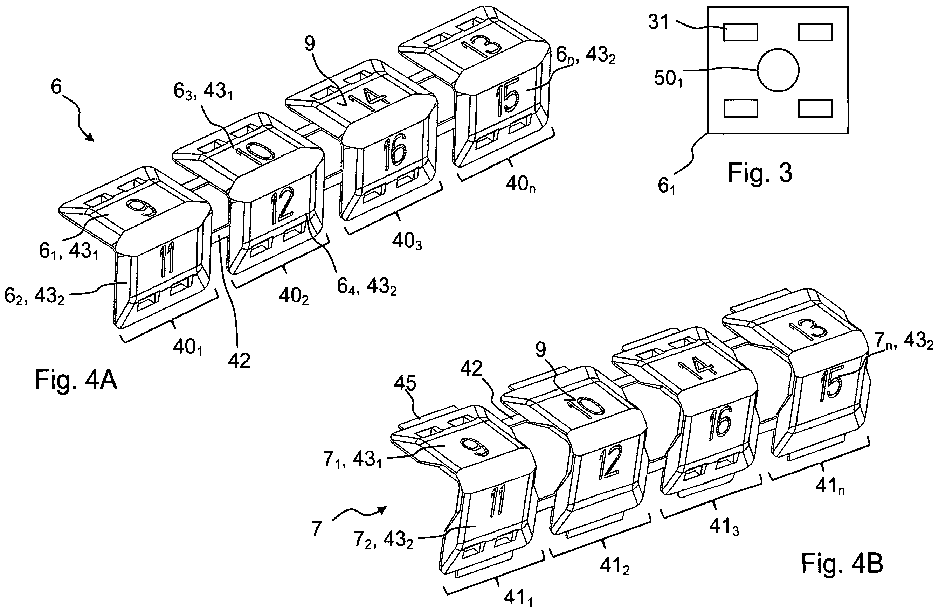

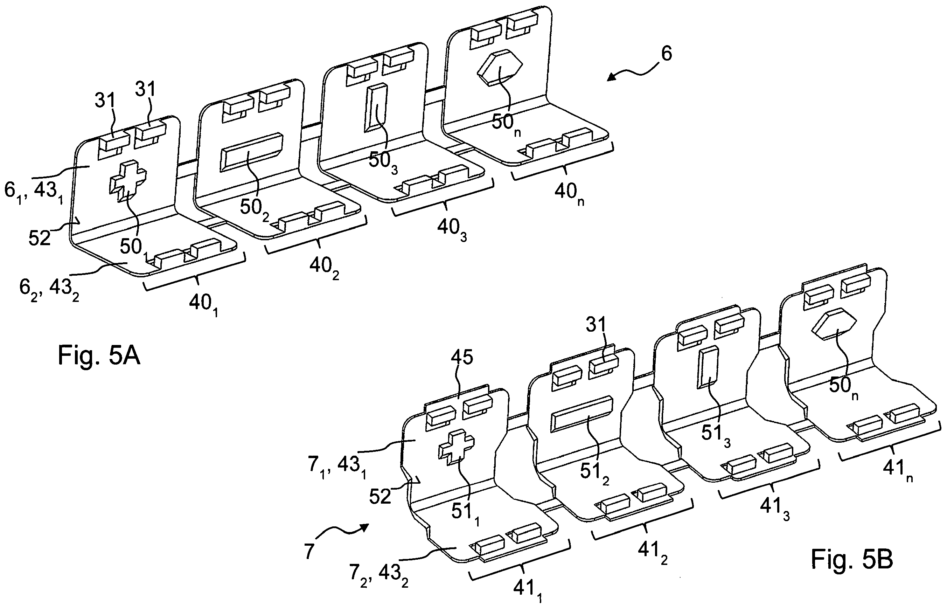

Innerhalb der Ausführungsbeispiele, mit Ausnahme von Figur 3, bilden jeweils zwei Gleitelemente 6₁, 6₂, ..., 6ₙ des ersten Gleitsatzes 6 einen Gleitwinkel 40₁, 40₂, ..., 40ₙ. Der Aufbau des Gleitwinkels wird mit Bezug auf die Figuren 4A, 4B, 5A und 5B noch näher erläutert.

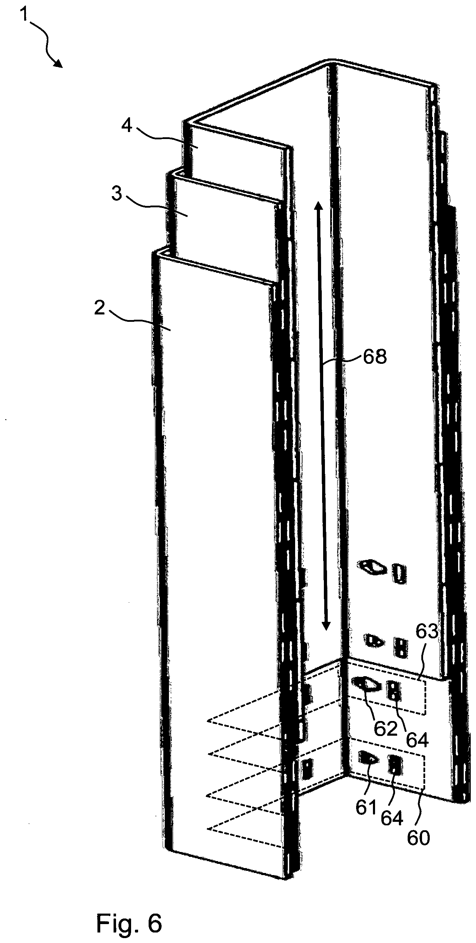

Das erste Innenrohr 3 weist in Umfangsrichtung mehrere in einer ersten Reihe 60 voneinander beabstandete Kodieröffnungen 61 auf, wie dies beispielsweise in Figur 6 dargestellt ist. Zumindest einige der Kodieröffnungen 61 der ersten Reihe 60 unterscheiden sich in ihrer Form und/oder ihrer Größe voneinander. Zumindest einige der Gleitelemente 6₁, 6₂, ..., 6ₙ des ersten Gleitsatzes 6 sind dabei mit Kodiervorsprüngen 50₁, 50₂, ..., 50ₙ versehen, wie dies beispielsweise in den Figuren 3, 5A oder 5B dargestellt ist. Die Kodiervorsprünge 50₁, 50₂, ..., 50ₙ der Gleitelemente 6₁, 6₂, ..., 6ₙ korrespondieren hinsichtlich ihrer Form, Größe und/oder der Möglichkeit, in die zugehörigen Kodieröffnungen 61 einführbar zu sein, mit der Form und Größe der jeweiligen Kodieröffnungen 61 der ersten Reihe derart, dass die Gleitelemente 6₁, 6₂, ..., 6ₙ des ersten Gleitsatzes 6 nur an den ihnen zugedachten Montagepositionen in Umfangsrichtung an der Außenwandung 8 des ersten Innenrohrs 3 befestigbar oder befestigt sind. Dadurch können die Gleitelemente 6₁, 6₂, ..., 6ₙ eindeutig den zu diesen korrespondierenden Kodiervorsprüngen 50₁, 50₂, ..., 50ₙ mittels des Poka-Joke-Prinzips zugeordnet werden.

Am ersten Innenrohr 3 sind in Längsrichtung, also in die Richtung, in die das erste Innenrohr 3 gegenüber dem Außenrohr 2 verschoben wird, beabstandet zu den in Umfangsrichtung angeordneten Kodieröffnungen 61 der ersten Reihe 60 weitere in Umfangsrichtung angeordnete Kodieröffnungen 62 in zumindest einer zweiten Reihe 63 ausgebildet. Diese sind beispielsweise in Figur 6 gezeigt. Zumindest einige der Kodieröffnungen 62 der zweiten Reihe 63 unterscheiden sich in ihrer Form und/oder Größe voneinander. In Figur 1 ist ein hierzu korrespondierender zweiter Gleitsatz 7 gezeigt, der mehrere Gleitelemente 7₁, 7₂, ..., 7ₙ aufweist, die zwischen dem ersten Innenrohr 3 und dem Außenrohr 2 in Umfangsrichtung an der Außenwandung 8 des ersten Innenrohrs 3 angeordnet sind, worüber die beiden Rohre 2, 3 gegeneinander ohne ein Bewegungsspiel längsverschiebbar geführt sind. Auch diese Gleitelemente 7₁, 7₂, ..., 7ₙ des zweiten Gleitsatzes 7 sind mit Kodiervorsprüngen 51₁, 51₂, ..., 51ₙ versehen, wie diese beispielweise in Figur 5B dargestellt sind. Die Kodiervorsprünge 51₁, 51₂, ..., 51ₙ der Gleitelemente 7₁, 7₂, ..., 7ₙ des zweiten Gleitsatzes 7 korrespondieren hinsichtlich ihrer Form, Größe und/oder der Möglichkeit, in die zugeordneten Kodieröffnungen 62 einführbar zu sein, mit der Form und Größe der jeweiligen Kodieröffnungen 62 der zweiten Reihe 63 derart, dass die Gleitelemente 7₁, 7₂, ..., 7ₙ des zweiten Gleitsatzes 7 nur an den ihnen zugedachten Montagepositionen in Umfangsrichtung an der Außenwandung 8 des ersten Innenrohrs 3 befestigbar oder befestigt sind.

Es ist aber auch möglich, dass die zweiten Gleitelemente 7₁, 7₂, ..., 7ₙ nicht nur in Längsrichtung zu den ersten Gleitelementen 6₁, 6₂, ..., 6ₙ versetzt zueinander angeordnet sind, sondern auch quer zur Längsrichtung, also in Umfangsrichtung.

Die Gleitelemente 6₁, 6₂, ..., 6ₙ des ersten Gleitsatzes 6 sind untereinander bevorzugt einzig hinsichtlich der Umfangsrichtung versetzt zueinander angeordnet und nicht hinsichtlich der Längsrichtung. Gleiches gilt auch für die Gleitelemente 7₁, 7₂, ..., 7ₙ des zweiten Gleitsatzes. Daher kann von einer ersten und zweiten Reihe 60, 63 gesprochen werden.

Die Gleitelemente 6₁, 6₂, ..., 6ₙ und 7₁, 7₂, ..., 7ₙ des ersten und zweiten Gleitsatzes 6, 7 sind über ihren gesamten Verfahrweg 68 von der Innenwandung 10 des Außenrohrs 2 umgeben. Unter einem Verfahrweg 68 wird eine Strecke in Längsrichtung verstanden, zwischen deren beiden Endpunkten sich die Gleitelemente 6₁, 6₂, ..., 6ₙ des ersten Gleitsatzes 6 oder des zweiten Gleitsatzes 7 bewegen.

In dem Ausführungsbeispiel aus Figur 1 ist das Außenrohr 2 bevorzugt stationär angeordnet. Das erste Innenrohr 3 und das zweite Innenrohr 4 bewegen sich gegenüber dem stationär angeordneten Außenrohr 2. Es wäre allerdings auch möglich, dass das zweite Innenrohr 4, also das innerste Rohr stationär angeordnet ist, wobei sich das erste Innenrohr 3 und das Außenrohr 2 gegenüber dem zweiten Innenrohr 4 bewegen, also verfahrbar sind.

Es ist auch möglich, dass die erfindungsgemäße Gleitlagerung 5 mit dem ersten Gleitsatz 6 und dem zweiten Gleitsatz 7 an der Innenwandung 10 des Außenrohrs 2 angeordnet ist. In diesem Fall müssten die Kodieröffnungen 61, 62 der ersten und zweiten Reihe 60, 63 am Außenrohr 2 angebracht sein. In diesem Fall würde noch eine Abdeckung an der Umfangswandung des Außenrohrs 2 angebracht werden.

Auch bei Verwendung des zweiten Innenrohrs 4 oder eines weiteren nicht dargestellten Innenrohrs gelten die bereits gemachten Ausführungen. Auch das zweite Innenrohr 4 verfügt über eine Gleitlagerung 5, die einen ersten Gleitsatz 6 und einen in Längsrichtung dazu beabstandeten zweiten Gleitsatz 7 aufweist.

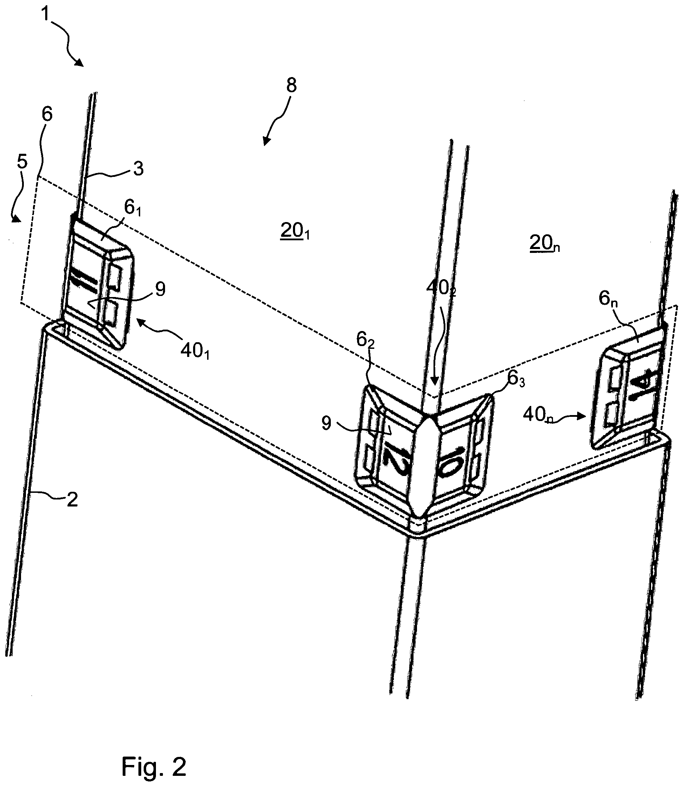

Figur 2 zeigt eine weitere räumliche Darstellung der erfindungsgemäßen teleskopierbaren Säule 1 in einem teilweise montierten Zustand. Das erste Innenrohr 3 weist die erfindungsgemäße Gleitlagerung 5 auf. Dargestellt ist ein erster Gleitsatz 6 mit den Gleitelementen 6₁, 6₂, ..., 6ₙ. Die Gleitelemente 6₁, 6₂, ..., 6ₙ sind maßgefertigt und weisen eine auf eine vorgegebene Materialdicke hin abgearbeitete, abgefräste und/oder abgeschliffene Auflage- und/oder Gleitfläche 9 auf, wobei die vorgegebene Materialdicke derart gewählt ist, dass das Bewegungsspiel des ersten Innenrohrs 3 gegenüber dem Außenrohr 2 unterhalb eines Schwellwertes liegt bzw. vorzugsweise spielfrei ist. Die Materialdicke kann auch schichtweise vergrößert werden, z.B. mittels eines dreidimensionalen Druckprozesses (3D-Drucker) auf den Zielwert hin aufgebaut werden. Nach der Montage der maßgefertigten Gleitelemente 6₁, 6₂, ..., 6ₙ an den ihnen jeweils zugedachten Montagepositionen in Umfangsrichtung an der Außenwandung 8 des ersten Innenrohrs 3 kann das erste Innenrohr 3, ohne eine weitere Einstellung der maßgefertigten Gleitelemente 6₁, 6₂, ..., 6ₙ vornehmen zu müssen, direkt in das Außenrohr 2 eingeführt werden.

In Figur 2 weist das Außenrohr 2 und das erste Innenrohr 3 einen n-eckigen Querschnitt mit n = 4 auf. An jedem der Enden, also an jeder der vier Seitenflächen 20₁, ..., 20ₙ des ersten Innenrohrs 3 sind in Umfangsrichtung zwei Gleitelemente 6₁, 6₂, ..., 6ₙ angebracht.

Es wäre auch möglich, dass das Außenrohr 2 und das erste Innenrohr 3 einen runden Querschnitt aufweisen und dass die Gleitelemente 6₁, 6₂, ..., 6ₙ in Umfangsrichtung gleichmäßig verteilt an der Außenwandung 8 des ersten Innenrohrs 3 angeordnet sind.

Die Gleitelemente 6₁, 6₂, ..., 6ₙ, die an verschiedenen aneinander angrenzenden Seitenflächen 20₁, ..., 20ₙ angeordnet sind, weisen eine unterschiedliche Materialdicke auf. Anders kann es sich bei den Gleitelementen 6₁, 6₂, ..., 6ₙ verhalten, die an verschiedenen parallel zueinander verlaufenden Seitenflächen 20₁, ..., 20ₙ angeordnet sind. Diese weisen bevorzugt die gleiche Materialdicke auf. Dadurch ist sichergestellt, dass das erste Innenrohr 3 im Zentrum des Außenrohrs 2 angeordnet ist.

Insbesondere gilt, dass die Gleitelemente 6₁, 6₂, ..., 6ₙ des ersten Gleitsatzes 6, die an verschiedenen Seitenflächen 20₁, ..., 20ₙ des ersten Innenrohrs 3 angeordnet sind, unterschiedliche Materialdicken aufweisen. Gleiches gilt auch für die Gleitelemente 7₁, 7₂, ..., 7ₙ des zweiten Gleitsatzes 7.

Figur 3 zeigt eine zweidimensionale Darstellung eines Gleitelements 6₁, 6₂, ..., 6ₙ, das über einen Kodiervorsprung 50₁ verfügt. Die Gleitfläche 9 des Gleitelements 6₁ ist rechteckig, bevorzugt quadratisch. Sie kann aber auch jede andere geometrische Kontur aufweisen. Der Kodiervorsprung 50₁ ist an der Auflagefläche des Gleitelements 6₁ ausgebildet, wobei unter einer "Auflagefläche" die Fläche gemeint ist, mit der das Gleitelement 61 an der Außenwandung 8 des ersten Innenrohrs 3 aufliegt.

Das Gleitelement 6₁ weist außerdem zumindest zwei Befestigungsvorsprünge 31 auf, die in korrespondierende Befestigungsöffnungen 64 in dem ersten Innenrohr 3 eingreifen. Die Befestigungsöffnungen 64 sind beispielsweise in Figur 6 gezeigt. Es ist auch möglich, dass der zumindest eine Kodiervorsprung 50₁ des Gleitelements 6₁ gleichzeitig als Befestigungsvorsprung 31 dient. Die Befestigungsvorsprünge 31 stehen mit den dazu korrespondierenden Befestigungsöffnungen 64 derart in Kontakt, dass das Gleitelement 6₁ an seiner Montageposition dauerhaft fest an der Außenwandung 8 des Innenrohrs 3 befestigt werden kann. Bevorzugt wird das Gleitelement 6₁ an seiner Montageposition an der Außenwandung 8 festgeclipst. Die Befestigungsvorsprünge 31 sind daher vorgespannt, wenn das Gleitelement 6₁ in seiner Montageposition angeordnet ist. Die Befestigungsvorsprünge 31 sind bevorzugt am Rand des Gleitelements 6₁, also an der Unterseite des Gleitelements 6₁ angeordnet.

Die Figuren 4A und 4B zeigen eine räumliche Darstellung von Gleitelementen 6₁, 6₂, ..., 6ₙ; 7₁, 7₂, ..., 7ₙ eines ersten und eines zweiten Gleitsatzes 6, 7. Die Gleitelemente 6₁, 6₂, ..., 6ₙ aus Figur 4A sind in Form eines Gleitwinkels 40₁, 40₂, ..., 40ₙ ausgebildet. Insbesondere sind zwei an zwei benachbarten Seitenflächen 20₁, ..., 20ₙ angeordnete Gleitelemente 6₁, 6₂, ..., 6ₙ des ersten Gleitsatzes 6 Teil eines gemeinsamen Gleitwinkels 40₁, 40₂, ..., 40ₙ. Gleiches gilt auch für die Gleitelemente 7₁, 7₂, ..., 7ₙ des zweiten Gleitsatzes 7, die ebenfalls Teil eines Gleitwinkels 41₁, 41₂, ..., 41ₙ des zweiten Gleitsatzes 7 sind. Die Gleitwinkel 40₁, 40₂, ..., 40ₙ und 41₁, 41₂, ..., 41ₙ sind einteilig ausgebildet.

Der in Figur 4A dargestellte erste Gleitsatz 6 besteht aus n Gleitwinkeln 40₁, 40₂, ..., 40ₙ. Der zweite Gleitsatz 7 besteht ebenfalls aus n Gleitwinkeln 41₁, 41₂, ..., 41ₙ. In dem Beispiel aus Figur 4A und Figur 4B beträgt n = 4. Die einzelnen Gleitwinkel 40₁, 40₂, ..., 40ₙ sind über Befestigungsbrücken 42 miteinander verbunden. Diese Befestigungsbrücken 42 weisen Sollbruchstellen auf, an denen sich die jeweiligen Gleitwinkel 40₁, 40₂, ..., 40ₙ, 41₁, 41₂, ..., 41ₙ von diesen lösen lassen. Der erste Gleitsatz 6, der aus vier Gleitwinkeln 40₁, 40₂, ..., 40ₙ besteht, wird bevorzugt einteilig innerhalb eines Spritzgussverfahrens hergestellt. Bis zur endgültigen Montage und damit der Trennung der einzelnen Gleitwinkel 40₁, 40₂, ..., 40ₙ, 41₁, 41₂, ..., 41ₙ voneinander, liegt der erste Gleitsatz 6 als einteiliges Bauteil vor. Gleiches gilt auch für den zweiten Gleitsatz 7.

Der Gleitwinkel 40₁ des ersten Gleitsatzes 6 weist zwei Schenkel 43₁, 43₂ auf. Jeder dieser Schenkel 43₁, 43₂ kann vom Aufbau her einem Gleitelement 6₁, 6₂, ..., 6ₙ entsprechen, wie dieses in den vorherigen Figuren beschrieben worden ist. Zwei Schenkelinnenflächen der beiden Schenkel 43₁, 43₂ liegen an zwei benachbarten Seitenflächen 20₁, ..., 20ₙ der Außenwandung 8 des ersten Innenrohrs 3 an. An beiden Schenkelaußenflächen der beiden Schenkel 43₁, 43₂ ist jeweils eine Gleitfläche 9 ausgebildet.

Die Gleitelemente 6₁, 6₂, ..., 6ₙ, also die Schenkel 43₁, 43₂ der Gleitwinkel 40₁, 40₂, ..., 40ₙ unterscheiden sich voneinander durch ein erstes Unterscheidungsmerkmal. Bei dem ersten Unterscheidungsmerkmal handelt es sich um eine Farbe und/oder um ein Zeichen, welches in die Gleitfläche 9 der Gleitelemente 6₁, 6₂, ..., 6ₙ eingespritzt, eingefräst oder eingeätzt ist. Dies gilt sowohl für die einzelnen Gleitwinkel 40₁, 40₂, ..., 40ₙ untereinander, als auch für die einzelnen Gleitelemente 6₁, 6₂, ..., 6ₙ für sich alleine oder für diejenigen Gleitelemente 6₁, 6₂, ..., 6ₙ, die einen Gleitwinkel 40₁, 40₂, ..., 40ₙ bilden.

Gleiches gilt auch für die Gleitelemente 7₁, 7₂, ..., 7ₙ des zweiten Gleitsatz 7 und für die entsprechenden Gleitwinkel 41₁, 41₂, ..., 41ₙ des zweiten Gleitsatz 7.

Die Gleitelemente 6₁, 6₂, ..., 6ₙ des ersten Gleitsatzes 6 unterscheiden sich in Draufsicht ebenfalls von den Gleitelementen 7₁, 7₂, ..., 7ₙ des zweiten Gleitsatzes 7 durch zumindest ein zweites Unterscheidungsmerkmal. Bei diesem kann es sich um eine Farbe und/oder um ein Zeichen handeln, das in die Gleitfläche 9 der Gleitelemente 6₁, 6₂, ..., 6ₙ und/oder 7₁, 7₂, ..., 7ₙ des ersten und/oder zweiten Gleitsatzes 6, 7 eingespritzt, eingefräst oder eingeätzt ist. In Figur 4B handelt es sich bei dem zweiten Unterscheidungsmerkmal um einen abstehenden Flügel 45, der an der Umrandung der Gleitelemente 7₁, 7₂, ..., 7ₙ des zweiten Gleitsatzes 7 angebracht ist. Bei dem Gleitflügel 45 kann es sich um eine Verlängerung eines Teils der Gleitelemente 7₁, 7₂, ..., 7ₙ des zweiten Gleitsatzes 7 handeln, so dass diese von den Gleitelementen 6₁, 6₂, ..., 6ₙ des ersten Gleitsatzes 6 unterschieden werden können. Dieser abstehende Flügel 45 kann auch an die Gleitelemente 6₁, 6₂, ..., 6ₙ des ersten Gleitsatzes 6 angebracht werden. Grundsätzlich kann sich auch die Form der Gleitelemente 6₁, 6₂, ..., 6ₙ des ersten Gleitsatzes 6 von denen des zweiten Gleitsatzes 7 unterscheiden. Gleiches gilt natürlich auch für die Gleitwinkel 40₁, 40₂, ..., 40ₙ und 41₁, 41₂, ..., 41ₙ.

Die Figuren 5A und 5B zeigen eine räumliche Darstellung von Gleitelementen 6₁, 6₂, ..., 6ₙ; 7₁, 7₂, ..., 7ₙ eines ersten und zweiten Gleitsatzes 6, 7, die zu Gleitwinkeln 40₁, 40₂, ..., 40ₙ; 41₁, 41₂, ..., 41ₙ verbunden sind. In Figur 5A ist der Kodiervorsprung 50₁, 50₂, ..., 50ₙ jeweils an einer Schenkelinnenfläche 52 ausgebildet. Es wäre auch möglich, dass der Kodiervorsprung 50₁, 50₂, ..., 50ₙ an beiden Schenkelinnenflächen 52 ausgebildet ist. Die Befestigungsvorsprünge 31 sind an dem Rand der beiden Schenkelinnenflächen 52 angeordnet, der am weitesten von der Längskante entfernt sind, die der Gleitwinkel 40₁, 40₂, ..., 40ₙ umgreift. Jede Schenkelinnenfläche 52 eines Gleitwinkels 40₁, 40₂, ..., 40ₙ weist in dem Ausführungsbeispiel aus Figur 5A zwei Befestigungsvorsprünge 31 auf. Es können allerdings auch mehr oder weniger Befestigungsvorsprünge 31 sein.

Die Kodiervorsprünge 50₁, 50₂, ..., 50ₙ der jeweils in Längsrichtung versetzt zueinander liegenden Gleitwinkel 40₁, 40₂, ..., 40ₙ und 41₁, 41₂, ..., 41ₙ des ersten und zweiten Gleitsatzes 6, 7 weisen die gleiche Form und/oder Größe auf. Die Form und/oder Größe des Kodiervorsprünge 50₁, 50₂, ..., 50ₙ der Gleitwinkel 40₁, 40₂, ..., 40ₙ des ersten Gleitsatzes 6 sind bevorzugt dann mit der Form und/oder Größe der Kodiervorsprünge 51₁, 51₂, ..., 51ₙ der Gleitwinkel 41₁, 41₂, ..., 41ₙ des zweiten Gleitsatzes 7 identisch, wenn die Dicke der jeweiligen Schenkel 43₁, 43₂ identisch ist. Gleiches gilt auch für die Gleitwinkel 41₁, 41₂, ..., 41ₙ des zweiten Gleitsatzes 7.

Es ist allerdings auch möglich, dass die Kodiervorsprünge 50₁, 50₂, ..., 50ₙ der Gleitwinkel 40₁, 40₂, ..., 40ₙ des ersten Gleitsatzes 6 untereinander in ihrer Form und/oder Größe unterschiedlich sind und gleichzeitig ebenfalls unterschiedlich sind zur den Kodiervorsprüngen 51₁, 51₂, ..., 51ₙ der Gleitwinkel 41₁, 41₂, ..., 41ₙ des zweiten Gleitsatzes 7, die ebenfalls untereinander verschieden sein können.

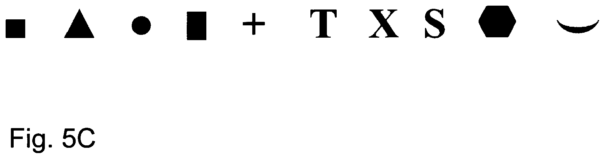

Figur 5C zeigt verschiedene Querschnittsformen der Kodieröffnungen 61, 62 und/oder der Kordiervorsprünge 50₁, 50₂, ..., 50ₙ und 51₁, 51₂, ..., 51ₙ. Diese entsprechen in Draufsicht beispielsweise einem Kreis, oder Oval, oder Dreieck, oder Rechteck, oder Quadrat, oder Trapez, oder Halbmond, oder Sechseck, oder Buchstaben, oder allgemein einem Ornament, oder einem regelmäßigen oder unregelmäßigen n-Polygon oder sind einem solchen angenähert.

Figur 6 zeigt eine räumliche Darstellung eines Längsschnitts durch die erfindungsgemäße teleskopierbare Säule 1 in montiertem Zustand, die ein Außenrohr 2, sowie ein erstes und ein zweites Innenrohr 3, 4 aufweist. Ein Verfahrweg 68 erstreckt sich in Längsrichtung. Dargestellt sind die Befestigungsöffnungen 64 der ersten Reihe 60 und der zweiten Reihe 63. Zu der ersten und zweiten Reihe 60, 63 gehören neben den Befestigungsöffnungen 64 auch die Kodieröffnungen 61, 62. Diese sind in Umfangsrichtung an der Außenwandung 8 des ersten Innenrohrs 3 und des zweiten Innenrohrs 4 angeordnet und durchsetzen diese vorzugsweise vollständig. Die Befestigungsöffnungen 64 und die Kodieröffnungen 61 der ersten Reihe 60 dienen zur Aufnahme des ersten Gleitsatzes 6, wohingegen die Befestigungsöffnungen 64 und die Kodieröffnungen 62 der zweiten Reihe 63 zur Aufnahme des zweiten Gleitsatzes 7 dienen.

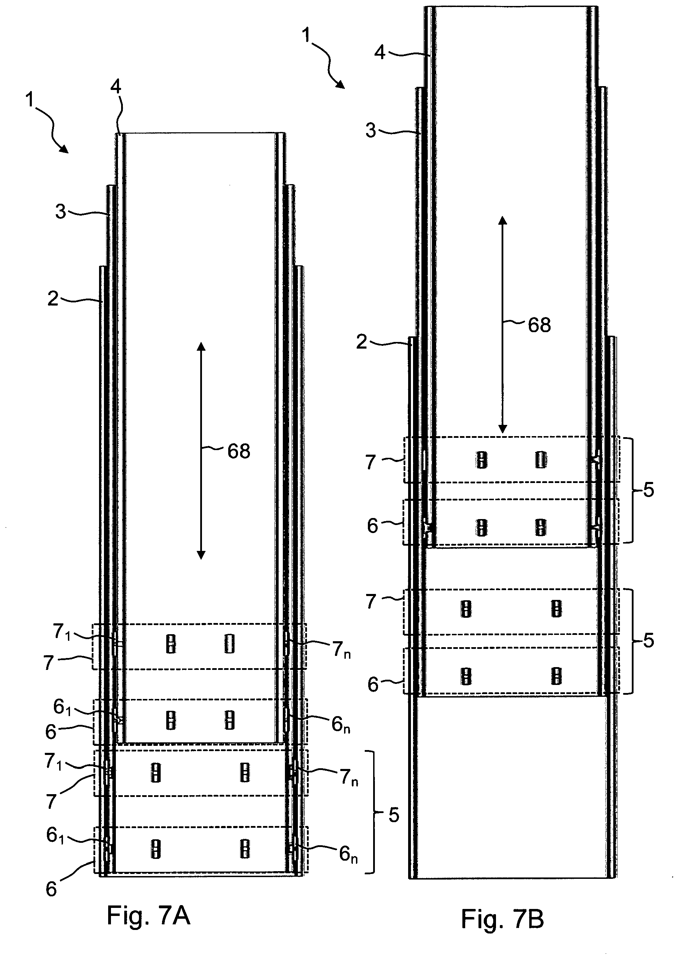

Die Figuren 7A und 7B zeigen verschiedene zweidimensionale Darstellungen eines Längsschnitts durch die erfindungsgemäße teleskopierbare Säule 1 in montiertem Zustand, die einen Außenrohr 2, sowie ein erstes und zweites Innenrohr 3, 4 aufweist und verschiedene Ausfahrhöhen hat. Die teleskopierbare Säule 1 weist in Figur 7B eine größere Längserstreckung auf als in Figur 7A. Zu erkennen sind jeweils die erste und zweite Reihe 60, 63, mit den jeweiligen Befestigungsöffnungen 64. Diese Befestigungsöffnungen 64 sind in Umfangsrichtung und parallel dazu in Längsrichtung versetzt an der Außenwandung 8 des ersten und zweiten Innenrohrs 3, 4 angeordnet und erstrecken sich vorzugsweise durch die Außenwandung 8 hindurch.

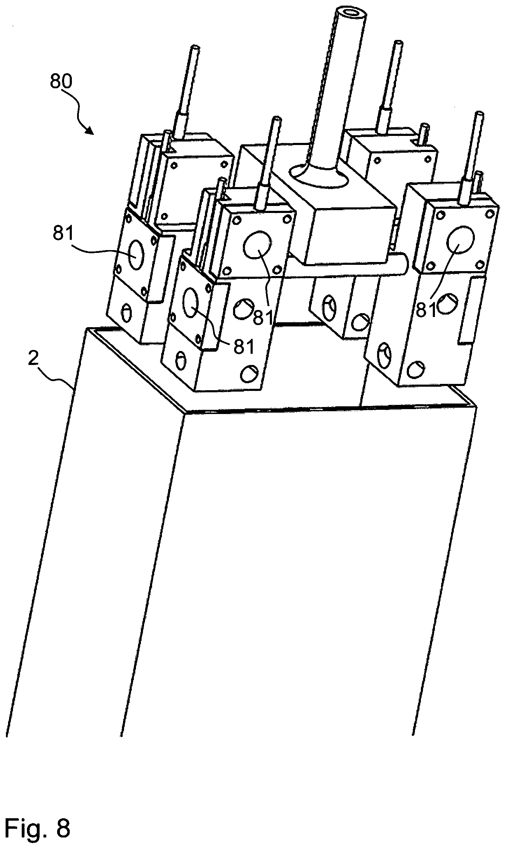

Figur 8 zeigt eine räumliche Darstellung eines Außenrohrs 2, dessen Innendurchmesser über eine Messeinrichtung 80, die in das Außenrohr 2 eingefahren wird, gemessen wird. Die Messeinrichtung 80 erfasst den Innendurchmesser des Außenrohrs 2 vorzugsweise über den gesamten Verfahrweg 68 des ersten Innenrohrs 3. Bei der Messeinrichtung 80 kann es sich um eine kapazitive oder induktive Messeinrichtung 80 handeln. Es kann sich ebenfalls um eine optische Messeinrichtung 80 handeln, die beispielsweise mittels Laser den Innendurchmesser, bzw. das Innenmaß des Außenrohrs 2 erfasst. Die Messeinrichtung 80 weist bevorzugt eine Vielzahl von Sensoren 81 auf, die zumindest in den Bereichen den Innendurchmesser, bzw. das Innenmaß des Außenrohrs 2 erfassen, in denen später die Gleitelemente 6₁, 6₂, ..., 6_{n;} 7₁, 7₂, ..., 7ₙ bzw. die Gleitwinkel 40₁, 40₂, ..., 40ₙ; 41₁, 41₂, ..., 41ₙ verfahren werden.

In einer Ausführungsform können in die Öffnungen der Sensoren Kugeln eingesetzt werden, die mittels eines Federmechanismus nach außen, also in Richtung der Innenwandung 10 des Außenrohrs 2 gedrückt werden. Je nach Durchmesser der Innenwandung 10 des Außenrohrs 2 werden diese Kugeln unterschiedlich weit in die Öffnungen der Sensoren 81 zurückgedrückt, wobei dieser Abstand vorzugsweise induktiv gemessen werden kann.

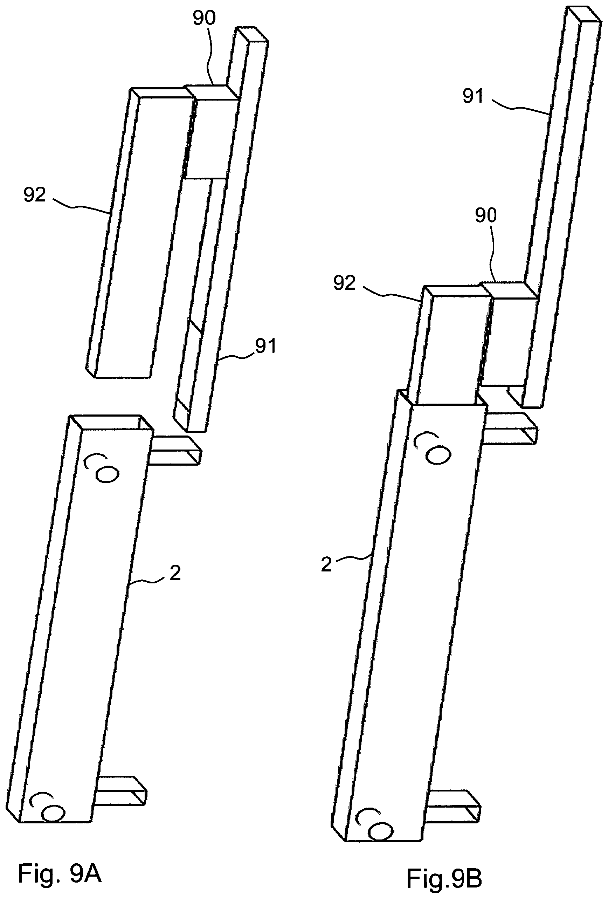

Die Figuren 9A und 9B zeigen verschiedene räumliche Darstellungen des Außenrohrs 2 und der Messeinrichtung 80, die nicht oder teilweise in das Außenrohr 2 eingelassen ist. In Figur 9A ist ein Außenrohr 2 dargestellt und beabstandet dazu eine Halte- und Positionierungsstange 92, an deren Ende die Messeinrichtung 80 montierbar ist, wobei die Halte- und Positionierungsstange 92 und damit die Messeinrichtung 80 mittels eines Schrittmotors 90, der an einer Führungsstange 91 befestigt ist, schrittweise in das Außenrohr 2 herabgelassen wird. Die Messeinrichtung 80 wird dabei an das untere Ende der Halte- und Positionierungsstange 92 montiert, die über den Schrittmotor mit der Führungsstange 91 beweglich verbunden ist. In Figur 9B ist die Messeinrichtung 80 in das Außenrohr 2 hinabgelassen. Die Führungsstange 91 kann sich dabei auf das Außenrohr 2 abstützen.

Die Messeinrichtung 80 wird - genauso wie der Schrittmotor 90 - über einen Computer gesteuert.

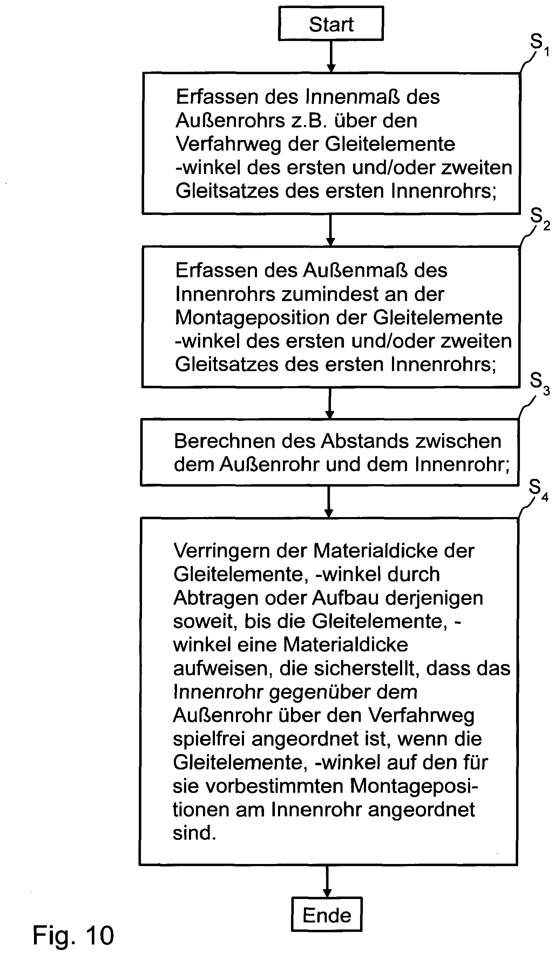

Figur 10 zeigt ein Flussdiagramm, welches die Herstellung eines maßgefertigten Gleitelements 6₁, 6₂, ..., 6ₙ oder 7₁, 7₂, ..., 7ₙ bzw. eines maßgefertigten Gleitwinkels 40₁, 40₂, ..., 40ₙ bzw. 41₁, 41₂, ..., 41ₙ beschreibt, der aus mehreren Gleitelementen 6₁, 6₂, ..., 6ₙ oder 7₁, 7₂, ..., 7ₙ besteht. In einem ersten Verfahrensschritt S₁ wird ein Innendurchmesser, bzw. ein Innenmaß des Außenrohrs 2 vorzugsweise über den Verfahrweg 68 des Gleitelements 6₁, 6₂, ..., 6ₙ; 7₁, 7₂, ..., 7ₙ oder des Gleitwinkels 40₁, 40₂, ..., 40ₙ; 41₁, 41₂, ..., 41ₙ des ersten und/oder zweite Gleitsatzes 6, 7 am ersten Innenrohr 3 erfasst.

Im Anschluss daran wird der zweite Verfahrensschritt S₂ ausgeführt. Im Verfahrensschritte S₂ wird der Außendurchmesser, bzw. das Außenmaß des Innenrohrs 3 zumindest an der Montageposition des Gleitelements 6₁, 6₂, ..., 6ₙ; 7₁, 7₂, ..., 7ₙ oder des Gleitwinkels 40₁, 40₂, ..., 40ₙ; 41₁, 41₂, ..., 41ₙ des ersten und/oder zweiten Gleitsatzes 6, 7 am ersten Innenrohr 3 erfasst. Der Verfahrensschritt S₂ kann auch vor dem Verfahrensschritt S₁ ausgeführt werden.

Im Anschluss daran wird der Verfahrensschritt S₃ ausgeführt. Im Verfahrensschritt S₃ wird ein Abstand zwischen dem Außenrohr 2 und dem ersten Innenrohr 3 zumindest an der Montageposition des Gleitelements 6₁, 6₂, ..., 6ₙ; 7₁, 7₂, ..., 7ₙ oder des Gleitwinkels 40₁, 40₂, ..., 40ₙ; 41₁, 41₂, ..., 41ₙ berechnet.

Im Anschluss daran wird der Verfahrensschritt S₄ ausgeführt. Im Verfahrensschritt S₄ wird die Materialdicke des Gleitelements 6₁, 6₂, ..., 6ₙ; 7₁, 7₂, ..., 7ₙ oder des Gleitwinkels 40₁, 40₂, ..., 40ₙ; 41₁, 41₂, ..., 41ₙ des ersten und/oder zweiten Gleitsatzes 6, 7 durch Abtragen soweit verringert, bis das Gleitelement 6₁, 6₂, ..., 6ₙ; 7₁, 7₂, ..., 7ₙ oder ein erster und/oder ein zweiter Schenkel 43₁, 43₂ des Gleitwinkels 40₁, 40₂, ..., 40ₙ; 41₁, 41₂, ..., 41ₙ des ersten und/oder zweiten Gleitsatzes 6, 7 eine Materialdicke aufweist, die vorzugsweise dem berechneten Abstand entspricht. Dies bedeutet, dass die Gleitelemente 6₁, 6₂, ..., 6ₙ; 7₁, 7₂, ..., 7ₙ oder die Gleitwinkel 40₁, 40₂, ..., 40ₙ; 41₁, 41₂, ..., 41ₙ vor dem Verfahrensschritt S₄ eine Materialdicke aufweisen müssen, die größer ist, als der Abstand zwischen der Außenwandung 8 des ersten Innenrohrs 3 und der Innenwandung 10 des Außenrohrs 2. Innerhalb des Verfahrensschritts S₄ ist es auch möglich, dass das Gleitelement 6₁, 6₂, ..., 6ₙ und 7₁, 7₂, ..., 7ₙ oder der Gleitwinkel 40₁, 40₂, ..., 40ₙ und 41₁, 41₂, ..., 41ₙ des ersten und/oder zweiten Gleitsatzes 6, 7 bis hin zu einer Materialdicke aufgebaut wird, die dem berechneten Abstand entspricht. Dies kann z.B. durch ein dreidimensionales Druckverfahren (3D-Drucker) geschehen.

Es ist auch möglich, dass im Verfahrensschritt S₄ die Materialdicke des Gleitelements 6₁, 6₂, ..., 6ₙ; 7₁, 7₂, ..., 7ₙ oder die des ersten und zweiten Schenkels 43₁, 43₂ des Gleitwinkels 40₁, 40₂, ..., 40ₙ; 41₁, 41₂, ..., 41ₙ auf einen Zielwert reduziert oder auf einen Zielwert aufgebaut wird, wobei der Zielwert der kleinste Abstand über den Verfahrweg 68 zwischen der Außenwandung 8 des Innenrohrs 3 an der Montageposition des Gleitelements 6₁, 6₂, ..., 6ₙ; 7₁, 7₂, ..., 7ₙ oder des Gleitwinkels 40₁, 40₂, ..., 40ₙ; 41₁, 41₂, ..., 41ₙ zu der angrenzenden Innenwandung 10 des Außenrohrs 2 ist. Dadurch wird sichergestellt, dass das erste Innenrohr 3 problemlos innerhalb des Außenrohrs 2 verfahrbar ist. Der Zielwert, der die Höhe des kleinsten Abstandes aufweist, kann im Verfahrensschritt S₃ berechnet werden. Die Abtragung erfolgt entweder an der Oberseite, also an der Gleitfläche 9 oder an der Auflageseite, bei der es sich bei dem Gleitwinkel 40₁, 40₂, ..., 40ₙ; 41₁, 41₂, ..., 41ₙ um die Schenkelinnenflächen 52 handelt.

Bevorzugt ist die Materialdicke von zwei Gleitelementen 6₁, 6₂, ..., 6ₙ; 7₁, 7₂, ..., 7ₙ, die an zwei parallel zueinander liegenden Seitenflächen 20₁, ..., 20ₙ des Innenrohrs 3 angebracht sind, gleich groß. Dadurch ist gewährleistet, dass das erste Innenrohr 3 im Zentrum des Außenrohrs 2 angeordnet ist. Gleiches gilt auch für die jeweiligen parallel zueinander angeordneten Schenkel 43₁, 43₂ von zwei Gleitwinkeln 40₁, 40₂, ..., 40ₙ; 41₁, 41₂, ..., 41ₙ.

Im Verfahrensschritt S₄ wird die Materialdicke des Gleitelements 6₁, 6₂, ..., 6ₙ; 7₁, 7₂, ..., 7ₙ oder der beiden Schenkel 43₁, 43₂ des Gleitwinkels 40₁, 40₂, ..., 40ₙ; 41₁, 41₂, ..., 41ₙ mittels eines Fräsprozesses und/oder Schleifprozesses verringert. Wird die Materialdicke aufgebaut, indem die Gleitelemente 6₁, 6₂, ..., 6ₙ; 7₁, 7₂, ..., 7ₙ gedruckt werden, dann geschieht dies über ein dreidimensionales Druckverfahren, bei dem beispielsweise ein Kunststoff aufgeschmolzen wird. Auch in diesem Fall sind die Gleitelemente 6₁, 6₂, ..., 6ₙ; 7₁, 7₂, ..., 7ₙ, bzw. Gleitwinkel 40₁, 40₂, ..., 40ₙ und 41₁, 41₂, ..., 41ₙ einteilig hergestellt.

Der erste Gleitsatz 6 und/oder der zweite Gleitsatz 7 mit den jeweiligen Gleitelementen 6₁, 6₂, ..., 6ₙ; 7₁, 7₂, ..., 7ₙ oder den Gleitwinkeln 40₁, 40₂, ..., 40ₙ; 41₁, 41₂, ..., 41ₙ werden in einem Verfahrensschritt "Spritzgussgießen" mittels eines Spritzgussverfahrens einteilig hergestellt. Die jeweiligen Kodiervorsprünge 50₁, 50₂, ..., 50ₙ; 51₁, 51₂, ..., 51ₙ werden innerhalb dieses Spritzgussverfahrens ebenfalls mithergestellt. Gleiches gilt für die Befestigungsvorsprünge 31. Es ist auch möglich, dass die Kodiervorsprünge 50₁, 50₂, ..., 50ₙ; 51₁, 51₂, ..., 51ₙ genauso wie die Befestigungsvorsprünge 31 mittels eines Fräsprozesses herausgearbeitet werden. Dies kann vorzugsweise ebenfalls im Verfahrensschritt S₄ geschehen.

Im Verfahrensschritt S₄ ist es auch möglich, dass das erste Unterscheidungsmerkmal in Form eines Zeichens mittels des Fräsprozesses in eine Gleitfläche 9 des Gleitelements 6₁, 6₂, ..., 6ₙ; 7₁, 7₂, ..., 7ₙ eingefräst wird. Dies kann auch für die Gleitflächen 9 der Gleitwinkel 40₁, 40₂, ..., 40ₙ; 41₁, 41₂, ..., 41ₙ gelten. Das erste Unterscheidungsmerkmal kann stattdessen auch im Verfahrensschritt "Spitzgussgießen" direkt in die entsprechenden Gleitelement 6₁, 6₂, ..., 6ₙ; 7₁, 7₂, ..., 7ₙ oder Gleitwinkel 40₁, 40₂, ..., 40ₙ; 41₁, 41₂, ..., 41ₙ eingearbeitet werden. Auch unter Nutzung eines dreidimensionalen Druckverfahrens kann das erste Unterscheidungsmerkmal eingebracht werden.

Bevorzugt wird innerhalb des Verfahrensschrittes S₄ "Anpassen" die Materialdicke der beiden Schenkel 43₁, 43₂ eines Gleitwinkels 40₁, 40₂, ..., 40ₙ; 41₁, 41₂, ..., 41ₙ mittels eines Fräsprozesses unter Verwendung eines Prismenfräsers gleichzeitig auf den gewünschten Zielwert reduziert. Dies erlaubt, dass der Gleitwinkel 40₁, 40₂, ..., 40ₙ; 41₁, 41₂, ..., 41ₙ ohne Umspannen oder ohne eine Neuausrichtung des Fräskopfes hergestellt werden kann.

Die Gleitelemente 6₁, 6₂, ..., 6ₙ; 7₁, 7₂, ..., 7ₙ und/oder die Gleitwinkel 40₁, 40₂, ..., 40ₙ; 41₁, 41₂, ..., 41ₙ weisen einen niedrigeren Reibungskoeffizienten auf, als die Außenwandung 8 des ersten Innenrohrs 3 oder die Innenwandung 11 des Außenrohrs 2. Die Gleitelemente bestehen beispielsweise aus Polytetrafluorethylen.

Gleitelemente 6₁, 6₂, ..., 6ₙ; 7₁, 7₂, ..., 7ₙ, bzw. Schenkel 43₁, 43₂ von Gleitwinkeln 40₁, 40₂, ..., 40ₙ; 41₁, 41₂, ..., 41ₙ, die gleich dick sind, weisen die gleichen Kordiervorsprünge 50₁, 50₂, ..., 50ₙ; 51₁, 51₂, ..., 51ₙ, und/oder die gleichen ersten Unterscheidungsmerkmale auf.

Ein Gleitelement 6₁, 6₂, ..., 6ₙ; 7₁, 7₂, ..., 7ₙ oder ein Gleitwinkel 40₁, 40₂, ..., 40ₙ; 41₁, 41₂, ..., 41ₙ steht nur in Kontakt mit der Außenwandung 8 des ersten oder zweiten Innenrohrs 3, 4 und der Innenwandung 10 des Außenrohrs oder des ersten Innenrohrs 4. Die Gleitelemente 6₁, 6₂, ..., 6ₙ; 7₁, 7₂, ..., 7ₙ und/oder die Gleitwinkel 40₁, 40₂, ..., 40ₙ; 41₁, 41₂, ..., 41ₙ liegen einzig auf der Außenwandung 8 des ersten Innenrohrs 3 oder auf der Außenwandung des zweiten Innenrohrs 4 auf. Ihre Materialdicke ist im montierten Zustand unveränderbar.

Der Abstand der Gleitfläche 9 eines Gleitelements 6₁, 6₂, ..., 6ₙ; 7₁, 7₂, ..., 7ₙ und/oder eines Gleitwinkels 40₁, 40₂, ..., 40ₙ; 41₁, 41₂, ..., 41ₙ zur Innenwandung 10 des Außenrohrs ist im montierten Zustand unveränderbar.

Das befestigen der Gleitelemente 6₁, 6₂, ..., 6ₙ; 7₁, 7₂, ..., 7ₙ und/oder der Gleitwinkel 40₁, 40₂, ..., 40ₙ; 41₁, 41₂, ..., 41ₙ an der Außenwandung 8 des ersten Innenrohrs 3 erfolgt bevorzugt schraubenfrei und/oder klebefrei. Die Gleitelemente 6₁, 6₂, ..., 6ₙ; 7₁, 7₂, ..., 7ₙ und/oder der Gleitwinkel 40₁, 40₂, ..., 40ₙ; 41₁, 41₂, ..., 41ₙ sind bzgl. ihrer Materialdicke bereits vor der Montage auf den gewünschten Wert voreingestellt.

Ein Frästeil kann ebenfalls ein Schleifteil sein, bzw. ein Fräsprozess kann ebenfalls ein Schleifprozess sein, bzw. einen solchen umfassen.

Abschließend wird angemerkt, dass der Verfahrensschritt "Anpassen" der Materialdicke auch die ein- oder mehrmaligen wechselweisen Schritte "schichtweiser Aufbau der Materialdicke unter Vergrößerung der Materialdicke" und anschließendes "Abarbeiten der Materialdicke unter Verringerung der Materialdicke" sowie in umgekehrter Reihenfolge umfassen kann.

Es ist auch möglich, dass die Gleitelemente 6₁, 6₂, ..., 6ₙ; 7₁, 7₂, ..., 7ₙ und/oder die Gleitwinkel 40₁, 40₂, ..., 40ₙ; 41₁, 41₂, ..., 41ₙ nicht vollständig mittels eines 3D-Druckers hergestellt werden, sondern der 3D-Drucker eine Grundlage bedruckt, die beispielsweise besonders widerstandsfest ist. Die Gleitelemente 6₁, 6₂, ..., 6ₙ; 7₁, 7₂, ..., 7ₙ und/oder die Gleitwinkel 40₁, 40₂, ..., 40ₙ; 41₁, 41₂, ..., 41ₙ bestehen in diesem Fall aus unterschiedlichen Stoffen, sind aber dennoch einteilig ausgebildet.

Die Erfindung ist nicht auf die beschriebenen Ausführungsbeispiele beschränkt. Im Rahmen der Erfindung gemäß der vorliegenden Ansprüche sind alle beschriebenen und/oder gezeichneten Merkmale beliebig miteinander kombinierbar.

## Patentansprüche

1. Teleskopierbare Säule (1) mit einem Außenrohr (2) und zumindest einem ersten Innenrohr (3), wobei das zumindest eine erste Innenrohr (3) gegenüber dem Außenrohr (2) teleskopartig verfahrbar ist, wobei das zumindest eine erste Innenrohr (3) mit einer Gleitlagerung (5) ausgestattet ist, die folgende Merkmale umfasst:
- ein erster Gleitsatz (6), der mehrere Gleitelemente (6₁, 6₂, ..., 6ₙ) aufweist, die zwischen dem ersten Innenrohr (3) und dem Außenrohr (3) in Umfangsrichtung an der Außenwandung (8) des ersten Innenrohrs (3) angeordnet sind, worüber die beiden Rohre (2, 3) gegeneinander längsverschieblich geführt sind;
- die Gleitelemente (6₁, 6₂, ..., 6ₙ) des ersten Gleitsatzes (6) sind an dem ersten Innenrohr (3) befestigt oder angebracht;
- die Gleitelemente (6₁, 6₂, ..., 6ₙ) des ersten Gleitsatzes (3) weisen Gleitflächen (9) auf, die in Kontakt mit der Innenwandung (10) des Außenrohrs (2) stehen;
- zumindest einige oder alle der Gleitelemente (6₁, 6₂, ..., 6ₙ) sind maßgefertigt und weisen eine auf eine vorgegebene Materialdicke hin
a) abgearbeitete, abgefräste und/oder abgeschliffene Auflage- und/oder Gleitfläche (9), oder
b) mittels eines 3D-Druckers aufgebaute und/oder gedruckte Auflage- und/oder Gleitfläche (9) auf,
wobei die vorgegebene Materialdicke derart gewählt ist, dass das Bewegungsspiel des ersten Innenrohrs (3) gegenüber dem Außenrohr (2) unterhalb eines Schwellwerts liegt, bzw. vorzugsweise spielfrei ist; **gekennzeichnet durch** die folgenden Merkmale:
- das erste Innenrohr (3) weist in Umfangsrichtung mehrere, in einer ersten Reihe (60) voneinander beabstandete Kodieröffnungen (61) auf;
- zumindest einige der Kodieröffnungen (61) der ersten Reihe (60) unterscheiden sich in ihrer Form und/oder Größe voneinander;
- zumindest einige der Gleitelemente (6₁, 6₂, ..., 6ₙ) des ersten Gleitsatzes (6) sind mit Kodiervorsprüngen (50₁, 50₂, ..., 50ₙ) versehen;
- die Kodiervorsprünge (50₁, 50₂, ..., 50ₙ) der Gleitelemente (6₁, 6₂, ..., 6ₙ) des ersten Gleitsatzes (6) korrespondieren bzgl. ihrer Form, Größe und/oder der Möglichkeit, in zugeordnete Kodieröffnungen (61) einführbar zu sein, mit der Form und Größe der jeweiligen Kodieröffnungen (61) der ersten Reihe (60) derart, dass die Gleitelemente (6₁, 6₂, ..., 6ₙ) des ersten Gleitsatzes (6) nur an den ihnen zugedachten Montagepositionen in Umfangsrichtung an der Außenwandung (8) des ersten Innenrohrs (3) befestigbar oder befestigt sind.

2. Teleskopierbare Säule nach Anspruch 1, **dadurch gekennzeichnet, dass** die Gleitlagerung (5) die folgenden Merkmale aufweist:
- die Querschnittsform der Kodieröffnungen (61, 62) und/oder der Kordiervorsprünge (50₁, 50₂, ..., 50ₙ und 51₁, 51₂, ..., 51ₙ) entspricht in Draufsicht einem
a) Kreis; oder
b) Oval; oder
c) Dreieck; oder
d) Rechteck; oder
e) Quadrat; oder
f) Trapez; oder
g) Halbmond; oder
h) Sechseck; oder
i) Buchstaben; oder
j) Ornament; oder
k) einem regelmäßigen oder unregelmäßigen n-Polygon oder ist einem solchen angenähert.

3. Teleskopierbare Säule nach Anspruch 1 oder 2, **dadurch gekennzeichnet, dass** die Gleitlagerung (5) die folgenden Merkmale aufweist:
- am ersten Innenrohr (3) sind in Längsrichtung beabstandet zu den in Umfangsrichtung angeordneten Kodieröffnungen (61) der ersten Reihe (60) weitere in Umfangsrichtung angeordnete Kodieröffnungen (62) in zumindest einer zweiten Reihe (63) ausgebildet;
- zumindest einige der Kodieröffnungen (62) der zweiten Reihe (63) unterscheiden sich in ihrer Form und/oder Größe voneinander;
- einen zweiten Gleitsatz (7), der mehrere Gleitelemente (7₁, 7₂, ..., 7ₙ) aufweist, die zwischen dem ersten Innenrohr (3) und dem Außenrohr (2) in Umfangsrichtung an der Außenwandung (8) des ersten Innenrohrs (3) angeordnet sind, worüber die beiden Rohre (2, 3) gegeneinander längsverschieblich geführt sind;
- zumindest einige der Gleitelemente (7₁, 7₂, ..., 7ₙ) des zweiten Gleitsatzes (7) sind mit Kodiervorsprüngen (51₁, 51₂, ..., 51ₙ) versehen;
- die Kodiervorsprünge (51₁, 51₂, ..., 51ₙ) der Gleitelemente (7₁, 7₂, ..., 7ₙ) des zweiten Gleitsatzes (7) korrespondieren bzgl. ihrer Form, Größe und/oder der Möglichkeit, in zugeordnete Kodieröffnungen (62) einführbar zu sein, mit der Form und Größe der jeweiligen Kodieröffnungen (62) der zweiten Reihe (63) derart, dass die Gleitelemente (7₁, 7₂, ..., 7ₙ) des zweiten Gleitsatzes (7) nur an den ihnen zugedachten Montagepositionen in Umfangsrichtung an der Außenwandung (8) des ersten Innenrohrs (3) befestigbar oder befestigt sind.

4. Teleskopierbare Säule nach Anspruch 3, **dadurch gekennzeichnet, dass** die Gleitlagerung (5) die folgenden Merkmale aufweist:
- die Gleitelemente (6₁, 6₂, ..., 6ₙ) des ersten Gleitsatzes (6) unterscheiden sich in Draufsicht durch zumindest ein erstes Unterscheidungsmerkmal voneinander; und/oder
- die Gleitelemente (7₁, 7₂, ..., 7ₙ) des zweiten Gleitsatzes (7) unterscheiden sich in Draufsicht durch zumindest das erstes Unterscheidungsmerkmal voneinander; und/oder
- die Gleitelemente (6₁, 6₂, ..., 6ₙ) des ersten Gleitsatzes (6) unterscheiden sich in Draufsicht von den Gleitelementen (7₁, 7₂, ..., 7ₙ) des zweiten Gleitsatzes (7) durch zumindest ein zweites Unterscheidungsmerkmal voneinander.

5. Teleskopierbare Säule nach Anspruch 4, **dadurch gekennzeichnet, dass** die Gleitlagerung die folgenden Merkmale aufweist:
- bei dem ersten Unterscheidungsmerkmal handelt es sich um:
a) ein Zeichen, vorzugsweise eine Nummer oder einen Buchstaben, das in die Gleitfläche (9) der Gleitelemente (6₁, 6₂, ..., 6ₙ und 7₁, 7₂, ..., 7ₙ) des ersten und/oder zweiten Gleitsatzes (6, 7) eingefräst oder eingeätzt ist; und/oder
b) eine Farbe; und/oder
- bei dem zweiten Unterscheidungsmerkmal handelt es sich um:
a) ein Zeichen, vorzugsweise eine Nummer oder einen Buchstaben, das in die Gleitfläche (9) der Gleitelemente (6₁, 6₂, ..., 6ₙ und 7₁, 7₂, ..., 7ₙ) des ersten und zweiten Gleitsatzes (6, 7) eingefräst oder eingeätzt ist; und/oder
b) eine Farbe; und/oder
c) eine andere Form, vorzugsweise um einen abstehenden Flügel (45), der an den Gleitelementen (6₁, 6₂, ..., 6ₙ oder 7₁, 7₂, ..., 7ₙ) des ersten oder zweiten Gleitsatzes (6, 7) ausgebildet ist.

6. Teleskopierbare Säule nach einem der Ansprüche 3 bis 5, **gekennzeichnet durch** die folgenden Merkmale:
a) das Außenrohr (2) und das erste Innenrohr (3) weisen einen runden Querschnitt auf und die Gleitelemente (6₁, 6₂, ..., 6ₙ und 7₁, 7₂, ..., 7ₙ) des ersten und/oder zweiten Gleitsatzes (6, 7) sind in Umfangsrichtung gleichmäßig verteilt an der Außenwandung (8) des ersten Innenrohrs (3) angeordnet; oder
b) das Außenrohr (2) und das erste Innenrohr (3) weisen einen n-eckigen Querschnitt mit n ≥ 3, bevorzugt n ≥ 4 auf; und an jeder der n Seitenflächen (20₁, ..., 20ₙ) des ersten Innenrohrs (3) sind in Umfangsrichtung zumindest ein Gleitelement (6₁, 6₂, ..., 6ₙ und 7₁, 7₂, ..., 7ₙ) des ersten und/oder zweiten Gleitsatzes (6, 7), vorzugsweise zwei oder mehr in Umfangsrichtung versetzt zueinander liegende Gleitelemente (6₁, 6₂, ..., 6ₙ und 7₁, 7₂, ..., 7ₙ) des ersten und/oder zweiten Gleitsatzes (6, 7) angeordnet.

7. Teleskopierbare Säule nach Anspruch 6, **dadurch gekennzeichnet, dass** die Gleitlagerung (5) die folgenden Merkmale aufweist:
- zwei an zwei benachbarten Seitenflächen (20₁, ..., 20ₙ) angeordnete Gleitelemente (6₁, 6₂, ..., 6ₙ) des ersten Gleitsatzes (6) sind Teil eines gemeinsamen Gleitwinkels (40₁, 40₂, ..., 40ₙ) des ersten Gleitsatzes (6); und/oder
- zwei an zwei benachbarten Seitenflächen (20₁, ..., 20ₙ) angeordnete Gleitelemente (7₁, 7₂, ..., 7ₙ) des zweiten Gleitsatzes (7) sind Teil eines gemeinsamen Gleitwinkels (41₁, 41₂, ..., 41ₙ) des zweiten Gleitsatzes (7).

8. Teleskopierbare Säule nach Anspruch 7, **dadurch gekennzeichnet, dass** die Gleitlagerung (5) die folgenden Merkmale aufweist:
- der Gleitwinkel (40₁, 40₂, ..., 40ₙ und 41₁, 41₂, ..., 41ₙ) des ersten Gleitsatzes (6) und/oder des zweiten Gleitsatzes (7) weist zwei Schenkel (43₁, 43₂) auf;
- zwei Schenkelinnenflächen (52) der beiden Schenkel (43₁, 43₂) liegen an zwei benachbarten Seitenflächen (20₁, ..., 20ₙ) an;
- an einer oder beiden Schenkelinnenflächen (52) ist der Kodiervorsprung (50₁, 50₂, ..., 50ₙ und 51₁, 51₂, ..., 51ₙ) ausgebildet;
- an beiden Schenkelaußenflächen der beiden Schenkel (43₁, 43₂) ist jeweils eine Gleitfläche (9) ausgebildet.

9. Teleskopierbare Säule nach einem der vorherigen Ansprüche, **gekennzeichnet durch** die folgenden Merkmale:
- zumindest einem zweiten Innenrohr (4), dessen Durchmesser kleiner ist, als der Durchmesser des ersten Innenrohrs (3);
- das zweite Innenrohr (4) weist eine Gleitlagerung (5) auf, die die Merkmale der Gleitlagerung nach einem der vorherigen Ansprüche umfasst, wobei die Materialdicke der einzelnen Gleitelemente (6₁, 6₂, ..., 6ₙ und 7₁, 7₂, ..., 7ₙ) auf den Abstand zwischen dem zweiten Innenrohr (4) und dem ersten Innenrohr (3) abgestimmt ist, so dass ein Bewegungsspiel des zweiten Innenrohrs (4) zum ersten Innenrohr (3) in Quer- und Längsrichtung über den gesamten Verfahrweg (68) der teleskopierbaren Säule (1) unterhalb eines definierten Schwellwerts liegt, vorzugsweise spielfrei ist;
- über die Gleitlagerung (5) des zweiten Innenrohrs (4) sind das erste Innenrohr (3) und das zweite Innenrohr (4) zueinander teleskopartig verschiebbar gelagert.

10. Teleskopierbare Säule nach Anspruch 9, **gekennzeichnet durch** das folgende Merkmal:
- die Gleitelemente (6₁, 6₂, ..., 6ₙ und 7₁, 7₂, ..., 7ₙ) der Gleitlagerung (5) des zweiten Innenrohrs (4) unterscheiden sich bzgl. ihrer Materialdicke von den Gleitelementen (6₁, 6₂, ..., 6ₙ und 7₁, 7₂, ..., 7ₙ) der Gleitlagerung (5) des ersten Innenrohrs (3) und/oder
- die Gleitelemente (6₁, 6₂, ..., 6ₙ und 7₁, 7₂, ..., 7ₙ) der Gleitlagerung (5) des zweiten Innenrohrs (4) unterscheiden sich bzgl.
a) einem Zeichen, vorzugsweise einer Nummer oder einem Buchstaben, das in die Gleitfläche (9) der Gleitelemente (6₁, 6₂, ..., 6ₙ und 7₁, 7₂, ..., 7ₙ) eingespritzt, eingefräst oder eingeätzt ist; und/oder
b) ihrer Farbe; und/oder
c) einer Form
von den Gleitelementen (6₁, 6₂, ..., 6ₙ und 7₁, 7₂, ..., 7ₙ) der Gleitlagerung (5) des ersten Innenrohrs (3).

11. Verfahren zur Herstellung eines maßgefertigten Gleitelements (6₁, 6₂, ..., 6ₙ) für eine teleskopierbare Säule (1) gemäß einem der vorherigen Ansprüche, wobei das Verfahren die folgenden Schritte umfasst:
- Erfassen (S₁) eines Innendurchmessers, bzw. Innenmaß des Außenrohrs (2) über den Verfahrweg (68) des Gleitelements (6₁, 6₂, ..., 6ₙ) des ersten Gleitsatzes (6) des ersten Innenrohrs (3);
- Erfassen (S₂) des Außendurchmessers, bzw. Außenmaß des Innenrohrs (3) zumindest an der Montageposition des Gleitelements (6₁, 6₂, ..., 6ₙ) des ersten Gleitsatzes (6) des ersten Innenrohrs (3);
- Berechnen (S₃) des Abstands zwischen zumindest einer Montageposition für ein Gleitelement (6₁, 6₂) an der Außenwand (8) des ersten Innenrohrs (3) hin zur daran angrenzenden Innenwand (10) des Außenrohrs (2);
- Anpassen (S₄) der Materialdicke des Gleitelements (6₁, 6₂, ..., 6ₙ) des ersten Gleitsatzes (6) durch:
a) Verringern oder Abtragen der Materialdicke des Gleitelements (6₁, 6₂, ..., 6ₙ) des ersten Gleitsatzes (6), bis das Gleitelement (6₁, 6₂, ..., 6ₙ) des ersten Gleitsatzes (6) eine Materialdicke aufweist, die dem berechneten Abstand entspricht; oder
b) Vergrößern oder Aufbauen der Materialdicke des Gleitelements (6₁, 6₂, ..., 6ₙ) des ersten Gleitsatzes (6), bis das Gleitelement (6₁, 6₂, ..., 6ₙ) des ersten Gleitsatzes (6) eine Materialdicke aufweist, die dem berechneten Abstand entspricht,
und
- im Verfahrensschritt Anpassen (S₄) wird die Materialdicke des Gleitelements (6₁, 6₂, ..., 6ₙ) auf einen Zielwert reduziert oder aufgebaut, wobei der Zielwert der kleinste Abstand über den Verfahrweg (68) zwischen der Außenwand (8) des ersten Innenrohrs (3) an der Montageposition des Gleitelements (6₁, 6₂, ..., 6ₙ) zu der angrenzenden Innenwand (10) des Außenrohrs (2) ist.

12. Verfahren zur Herstellung eines maßgefertigten Gleitelements (6₁, 6₂, ..., 6ₙ) für eine teleskopierbare Säule (1) gemäß einem der Ansprüche 1 bis 10, wobei das Verfahren die folgenden Schritte umfasst:
- Erfassen (S₁) eines Innendurchmessers, bzw. Innenmaß des Außenrohrs (2) über den Verfahrweg (68) des Gleitelements (6₁, 6₂, ..., 6ₙ) des ersten Gleitsatzes (6) des ersten Innenrohrs (3);
- Erfassen (S₂) des Außendurchmessers, bzw. Außenmaß des Innenrohrs (3) zumindest an der Montageposition des Gleitelements (6₁, 6₂, ..., 6ₙ) des ersten Gleitsatzes (6) des ersten Innenrohrs (3);
- Berechnen (S₃) des Abstands zwischen zumindest einer Montageposition für ein Gleitelement (6₁, 6₂) an der Außenwand (8) des ersten Innenrohrs (3) hin zur daran angrenzenden Innenwand (10) des Außenrohrs (2);
- Anpassen (S₄) der Materialdicke des Gleitelements (6₁, 6₂, ..., 6ₙ) des ersten Gleitsatzes (6) durch:
a) Verringern oder Abtragen der Materialdicke des Gleitelements (6₁, 6₂, ..., 6ₙ) des ersten Gleitsatzes (6), bis das Gleitelement (6₁, 6₂, ..., 6ₙ) des ersten Gleitsatzes (6) eine Materialdicke aufweist, die dem berechneten Abstand entspricht; oder
b) Vergrößern oder Aufbauen der Materialdicke des Gleitelements (6₁, 6₂, ..., 6ₙ) des ersten Gleitsatzes (6), bis das Gleitelement (6₁, 6₂, ..., 6ₙ) des ersten Gleitsatzes (6) eine Materialdicke aufweist, die dem berechneten Abstand entspricht,
und
- die Summe der Materialdicke von zwei Gleitelementen (6₁, 6₂, ...,), die an zwei parallel zueinander liegenden Seitenflächen (20₁, ..., 20ₙ) des ersten Innenrohrs (3) angebracht werden, wird im Verfahrensschritt Anpassen (S₄) auf einen Zielwert reduziert oder aufgebaut, wobei der Zielwert der Summe des kleinsten Abstands der beiden parallel zueinander liegenden Seitenflächen (20₁, ..., 20ₙ) des ersten Innenrohrs (3) hin zu der jeweiligen Innenwand (10) des Außenrohrs (2) über den Verfahrweg (68) entspricht.

13. Verfahren zur Herstellung eines maßgefertigten Gleitelements (6₁, 6₂, ..., 6ₙ) gemäß Anspruch 12, **gekennzeichnet durch** das folgende Merkmal:
- die Materialdicke von zwei Gleitelementen (6₁, 6₂, ..., 6ₙ), die an zwei parallel zueinander liegenden Seitenflächen (20₁, ..., 20ₙ) des ersten Innenrohrs (3) angebracht sind, ist gleich groß.

14. Verfahren zur Herstellung eines maßgefertigten Gleitelements (6₁, 6₂, ..., 6ₙ) für eine teleskopierbare Säule (1) gemäß einem der Ansprüche 1 bis 10, wobei das Verfahren die folgenden Schritte umfasst:
- Erfassen (S₁) eines Innendurchmessers, bzw. Innenmaß des Außenrohrs (2) vorzugsweise über den Verfahrweg (68) des Gleitelements (6₁, 6₂, ..., 6ₙ) des ersten Gleitsatzes (6) des ersten Innenrohrs (3);
- Erfassen (S₂) des Außendurchmessers, bzw. Außenmaß des Innenrohrs (3) zumindest an der Montageposition des Gleitelements (6₁, 6₂, ..., 6ₙ) des ersten Gleitsatzes (6) des ersten Innenrohrs (3);
- Berechnen (S₃) des Abstands zwischen zumindest einer Montageposition für ein Gleitelement (6₁, 6₂) an der Außenwand (8) des ersten Innenrohrs (3) hin zur daran angrenzenden Innenwand (10) des Außenrohrs (2);
- Anpassen (S₄) der Materialdicke des Gleitelements (6₁, 6₂, ..., 6ₙ) des ersten Gleitsatzes (6) durch:
a) Verringern oder Abtragen der Materialdicke des Gleitelements (6₁, 6₂, ..., 6ₙ) des ersten Gleitsatzes (6), bis das Gleitelement (6₁, 6₂, ..., 6ₙ) des ersten Gleitsatzes (6) eine Materialdicke aufweist, die dem berechneten Abstand entspricht; oder
b) Vergrößern oder Aufbauen der Materialdicke des Gleitelements (6₁, 6₂, ..., 6ₙ) des ersten Gleitsatzes (6), bis das Gleitelement (6₁, 6₂, ..., 6ₙ) des ersten Gleitsatzes (6) eine Materialdicke aufweist, die dem berechneten Abstand entspricht,
und
- im Verfahrensschritt Erfassen (S₁) des Innendurchmessers wird der Innendurchmesser bzw. Innenmaß mittels eines kapazitiven oder induktiven Messsystems (80) oder mit einer Lasereinheit erfasst, wobei das kapazitive oder induktive Messsystem (80) oder die Lasereinheit in das Außenrohr (2) eingetaucht wird.

15. Verfahren zur Herstellung eines maßgefertigten Gleitelements (6₁, 6₂, ..., 6ₙ) gemäß einem der Ansprüche 11 bis 14, **gekennzeichnet durch** das folgende Merkmal:
- im Verfahrensschritt Anpassen (S₄) wird die Materialdicke des Gleitelements (6₁, 6₂, ..., 6ₙ) mittels eines Fräsprozesses und/oder Schleifprozesses verringert oder mittels eines dreidimensionalen Druckprozesses aufgebaut.

## Claims

1. Telescopic column (1) comprising an outer tube (2) and at least one first inner tube (3), the at least one first inner tube (3) being telescopically movable relative to the outer tube (2), the at least one first inner tube (3) being equipped with a sliding bearing (5), which comprises the following features:
- a first sliding set (6) which has a plurality of sliding elements (6₁, 6₂, ..., 6ₙ) that are arranged between the first inner tube (3) and the outer tube (3) in a peripheral direction on the outer wall (8) of the first inner tube (3), by means of which sliding elements the two tubes (2, 3) are guided in a longitudinally shiftable manner in relation to one another;
- the sliding elements (6₁, 6₂, ..., 6ₙ) of the first sliding set (6) are fastened or attached to the first inner tube (3);
- the sliding elements (6₁, 6₂, ..., 6ₙ) of the first sliding set (3) comprise sliding surfaces (9) which are in contact with the inner wall (10) of the outer tube (2);
- at least some or all of the sliding elements (6₁, 6₂, ..., 6ₙ) are custom-made and have a contact surface and/or sliding surface (9) that is machined, milled and/or ground down to a specified material thickness, or
a) at least some or all of the sliding elements (6₁, 6₂, ..., 6ₙ) are custom-made and have a contact surface and/or sliding surface (9) that is machined, milled and/or ground down to a specified material thickness, or
b) a contact surface and/or sliding surface (9) that is built up/printed to a specified material thickness by means of a 3D printer,
wherein the specified material thickness being selected such that the movement play of the first inner tube (3) relative to the outer tube (2) is below a threshold value or is preferably free from play;
**characterised by** the following features:
- the first inner tube (3) has, in the peripheral direction, a plurality of coding openings (61) that are spaced apart from one another in a first row (60);
- at least some of the coding openings (61) of the first row (60) differ from one another in the shape and/or size thereof;
- at least some of the sliding elements (6₁, 6₂, ..., 6ₙ) of the first sliding set (6) are provided with coding projections (50₁, 50₂, ..., 50ₙ);
- the coding projections (50₁, 50₂, ..., 50ₙ) of the sliding elements (6₁, 6₂, ..., 6ₙ) of the first sliding set (6) correspond, with respect to the shape, size and/or possibility thereof to be introduced into associated coding openings (61), to the shape and size of the respective coding openings (61) of the first row (60) such that the sliding elements (6₁, 6₂, ..., 6ₙ) of the first sliding set (6) can be fastened or are fastened only at the mounting positions intended therefor in the peripheral direction on the outer wall (8) of the first inner tube (3).

2. Telescopic column according to claim 1, **characterised in that** the sliding bearing (5) has the following features:
- the cross-sectional shape of the coding openings (61, 62) and/or of the coding projections (50₁, 50₂, ..., 50ₙ and 51₁, 51₂, ..., 51ₙ) corresponds, in plan view, to
a) a circle; or
b) an oval; or
c) a triangle; or
d) a rectangle; or
e) a square; or
f) a trapeze; or
g) a crescent; or
h) a hexagon; or
i) letters; or
j) ornamentation; or
k) a regular or irregular n-polygon, or approximates a polygon of this type.

3. Telescopic column according to either claim 1 or claim 2, **characterised in that** the sliding bearing (5) has the following features:
- on the first inner tube (3), further coding openings (62) that are arranged in the peripheral direction are formed in at least one second row (63) so as to be spaced apart in the longitudinal direction from the coding openings (61) of the first row (60) that are arranged in the peripheral direction;
- at least some of the coding openings (62) of the second row (63) differ from one another in the shape and/or size thereof;
- a second sliding set (7) which has a plurality of sliding elements (7₁, 72, ..., 7ₙ) that are arranged between the first inner tube (3) and the outer tube (2) in the peripheral direction on the outer wall (8) of the first inner tube (3), by means of which sliding elements the two tubes (2, 3) are guided in a longitudinally shiftable manner relative to one another;
- at least some of the sliding elements (7₁, 72, ..., 7ₙ) of the second sliding set (7) are provided with coding projections (51₁, 51₂, ..., 51ₙ);
- the coding projections (51₁, 51₂, ..., 51ₙ) of the sliding elements (7₁, 7₂, ..., 7ₙ) of the second sliding set (7) correspond, with respect to the shape, size and/or possibility thereof to be introduced into associated coding openings (62), to the shape and size of the respective coding openings (62) of the second row (63) such that the sliding elements (7₁, 7₂, ..., 7ₙ) of the second sliding set (7) can be fastened or are fastened only at the mounting positions intended therefor in the peripheral direction on the outer wall (8) of the first inner tube (3).

4. Telescopic column according to claim 3, **characterised in that** the sliding bearing (5) has the following features:
- the sliding elements (6₁, 6₂, ..., 6ₙ) of the first sliding set (6) differ from one another in plan view by at least one first distinguishing feature; and/or
- the sliding elements (7₁, 7₂, ..., 7ₙ) of the second sliding set (7) differ from one another in plan view by at least the first distinguishing feature; and/or
- the sliding elements (6₁, 6₂, ..., 6ₙ) of the first sliding set (6) differ in plan view from the sliding elements (7₁, 7₂, ..., 7ₙ) of the second sliding set (7) from one another by at least a second distinguishing feature.

5. Telescopic column according to claim 4, **characterised in that** the sliding bearing has the following features:
- the first distinguishing feature is:
a) a character, preferably a number or a letter, which is milled or etched into the sliding surface (9) of the sliding elements (6₁, 6₂, ..., 6ₙ and 7₁, 7₂, ..., 7ₙ) of the first and/or second sliding set (6, 7); and/or
b) a colour; and/or
- the second distinguishing feature is:
a) a character, preferably a number or a letter, which is milled or etched into the sliding surface (9) of the sliding elements (6₁, 6₂, ..., 6ₙ and 7₁, 7₂, ..., 7ₙ) of the first and second sliding set (6, 7); and/or
b) a colour; and/or
c) another shape, preferably a protruding wing (45), which is formed on the sliding elements (6₁, 6₂, ..., 6ₙ or 7₁, 7₂, ..., 7ₙ) of the first or second sliding set (6, 7).

6. Telescopic column according to any of claims 3 to 5, **characterised by** the following features:
a) the outer tube (2) and the first inner tube (3) have a round cross section and the sliding elements (6₁, 6₂, ..., 6ₙ and 7₁, 7₂, ..., 7ₙ) of the first and/or second sliding set (6, 7) are arranged in an evenly distributed manner in the peripheral direction on the outer wall (8) of the first inner tube (3); or
b) the outer tube (2) and the first inner tube (3) have an n-sided cross section having n ≥ 3, preferably n ≥ 4; and at least one sliding element (6₁, 6₂, ..., 6ₙ and 7₁, 7₂, .., 7ₙ) of the first and/or second sliding set (6, 7), preferably two or more sliding elements (6₁, 6₂, ..., 6ₙ and 7₁, 7₂, ..., 7ₙ) of the first and/or second sliding set (6, 7) that are offset from one another in the peripheral direction, are arranged in the peripheral direction on each of the n side surfaces (20₁, ..., 20ₙ) of the first inner tube (3).

7. Telescopic column according to claim 6, **characterised in that** the sliding bearing (5) has the following features:
- two sliding elements (6₁, 6₂, ..., 6ₙ) of the first sliding set (6) that are arranged on two contiguous side surfaces (20₁, ..., 20ₙ) are part of a common sliding bracket (40₁, 40₂, ..., 40ₙ) of the first sliding set (6); and/or
- two sliding elements (7₁, 7₂, ..., 7ₙ) of the second sliding set (7) that are arranged on two contiguous side surfaces (20₁, ..., 20ₙ) are part of a common sliding bracket (41₁, 41₂, ..., 41ₙ) of the second sliding set (7).

8. Telescopic column according to claim 7, **characterised in that** the sliding bearing (5) has the following features:
- the sliding bracket (40₁, 40₂, ..., 40ₙ and 41₁, 41₂, ..., 41ₙ) of the first sliding set (6) and/or of the second sliding set (7) has two legs (43₁, 43₂);
- two inner leg surfaces (52) of the two legs (43₁, 43₂) abut two contiguous side surfaces (20₁, ..., 20ₙ);
- the coding projection (50₁, 50₂, ..., 50ₙ and 51₁, 51₂, ..., 51ₙ) is formed on one or both inner leg surfaces (52);
- a sliding surface (9) is formed on each of the two outer leg surfaces of the two legs (43₁, 43₂).

9. Telescopic column according to any of the preceding claims, **characterised by** the following features:
- at least one second inner tube (4), the diameter of which is smaller than the diameter of the first inner tube (3);
- the second inner tube (4) has a sliding bearing (5) which comprises the features of the sliding bearing according to any of the preceding claims, the material thickness of the individual sliding elements (6₁, 6₂, ..., 6ₙ and 7₁, 7₂, ..., 7ₙ) being matched to the distance between the second inner tube (4) and the first inner tube (3) such that a movement play of the second inner tube (4) relative to the first inner tube (3), in the transverse and longitudinal directions, is below a defined threshold value, preferably free from play, across the entire movement path (68) of the telescopic column (1);
- the first inner tube (3) and the second inner tube (4) are mounted so as to be telescopically shiftable relative to one another via the sliding bearing (5) of the second inner tube (4).

10. Telescopic column according to claim 9, **characterised by** the following feature:
- the sliding elements (6₁, 6₂, ..., 6ₙ and 7₁, 7₂, ..., 7ₙ) of the sliding bearing (5) of the second inner tube (4) differ from the sliding elements (6₁, 6₂, ..., 6ₙ and 7₁, 7₂, ..., 7ₙ) of the sliding bearing (5) of the first inner tube (3) in terms of the material thickness thereof, and/or
- the sliding elements (6₁, 6₂, ..., 6ₙ and 7₁, 7₂, ..., 7ₙ) of the sliding bearing (5) of the second inner tube (4) differ in terms of
a) a character, preferably a number or a letter, which is injected, milled or etched into the sliding surface (9) of the sliding elements (6₁, 6₂, ..., 6ₙ and 7₁, 7₂, ..., 7ₙ); and/or
b) the colour thereof; and/or
c) a shape
from the sliding elements (6₁, 6₂, ..., 6ₙ and 7₁, 7₂, ..., 7ₙ) of the sliding bearing (5) of the first inner tube (3).

11. Method for producing a custom-made sliding element (6₁, 6₂, ..., 6ₙ) for a telescopic column (1) according to any of the preceding claims, wherein the method comprises the following steps:
- detecting (S₁) an inner diameter or inner dimension of the outer tube (2) across the movement path (68) of the sliding element (6₁, 6₂, ..., 6ₙ) of the first sliding set (6) of the first inner tube (3);
- detecting (S₂) the outer diameter or outer dimension of the inner tube (3) at least at the mounting position of the sliding element (6₁, 6₂, ..., 6ₙ) of the first sliding set (6) of the first inner tube (3);
- calculating (S₃) the distance from at least one mounting position for a sliding element (6₁, 6₂) on the outer wall (8) of the first inner tube (3) to the adjacent inner wall (10) of the outer tube (2);
- adjusting (S₄) the material thickness of the sliding element (6₁, 6₂, ..., 6ₙ) of the first sliding set (6) by:
a) reducing or removing the material thickness of the sliding element (6₁, 6₂, ..., 6ₙ) of the first sliding set (6) until the sliding element (6₁, 6₂, ..., 6ₙ) of the first sliding set (6) has a material thickness that corresponds to the calculated distance; or
b) increasing or building up the material thickness of the sliding element (6₁, 6₂, ..., 6ₙ) of the first sliding set (6) until the sliding element (6₁, 6₂, ..., 6ₙ) of the first sliding set (6) has a material thickness that corresponds to the calculated distance,
and
- in the adjustment method step (S₄), the material thickness of the sliding element (6₁, 6₂, ..., 6ₙ) is reduced or built up to a target value, wherein the target value is the smallest distance across the movement path (68) between the outer wall (8) of the first inner tube (3) at the mounting position of the sliding element (6₁, 6₂, ..., 6ₙ) to the adjacent inner wall (10) of the outer tube (2).

12. Method for producing a custom-made sliding element (6₁, 6₂, ..., 6ₙ) for a telescopic column (1) according to any of claims 1 to 10, wherein the method comprises the following steps:
- detecting (S₁) an inner diameter or inner dimension of the outer tube (2) across the movement path (68) of the sliding element (6₁, 6₂, ..., 6ₙ) of the first sliding set (6) of the first inner tube (3);
- detecting (S₂) the outer diameter or outer dimension of the inner tube (3) at least at the mounting position of the sliding element (6₁, 6₂, ..., 6ₙ) of the first sliding set (6) of the first inner tube (3);
- calculating (S₃) the distance from at least one mounting position for a sliding element (6₁, 6₂) on the outer wall (8) of the first inner tube (3) to the adjacent inner wall (10) of the outer tube (2);
- adjusting (S₄) the material thickness of the sliding element (6₁, 6₂, ..., 6ₙ) of the first sliding set (6) by:
a) reducing or removing the material thickness of the sliding element (6₁, 6₂, ..., 6ₙ) of the first sliding set (6) until the sliding element (6₁, 6₂, ..., 6ₙ) of the first sliding set (6) has a material thickness that corresponds to the calculated distance; or
b) increasing or building up the material thickness of the sliding element (6₁, 6₂, ..., 6ₙ) of the first sliding set (6) until the sliding element (6₁, 6₂, ..., 6ₙ) of the first sliding set (6) has a material thickness that corresponds to the calculated distance,
and
- the sum of the material thickness of two sliding elements (6₁, 6₂, ...,) which are attached to two mutually parallel side surfaces (20₁, ..., 20ₙ) of the first inner tube (3) is reduced or built up to a target value in the adjustment method step (S₄), wherein the target value corresponds to the sum of the smallest distance from the two mutually parallel side surfaces (20₁, ..., 20ₙ) of the first inner tube (3) to the particular inner wall (10) of the outer tube (2) across the movement path (68).

13. Method for producing a custom-made sliding element (6₁, 6₂, ..., 6ₙ) according to claim 12, **characterised by** the following feature:
- the material thickness of two sliding elements (6₁, 6₂, ..., 6ₙ) that are attached to two mutually parallel side surfaces (20₁, ..., 20ₙ) of the first inner tube (3) is the same.

14. Method for producing a custom-made sliding element (6₁, 6₂, ..., 6ₙ) for a telescopic column (1) according to any of claims 1 to 10, wherein the method comprises the following steps:
- detecting (S₁) an inner diameter and/or inner dimension of the outer tube (2), preferably across the movement path (68) of the sliding element (6₁, 6₂, ..., 6ₙ) of the first sliding set (6) of the first inner tube (3);
- detecting (S₂) the outer diameter or outer dimension of the inner tube (3) at least at the mounting position of the sliding element (6₁, 6₂, ..., 6ₙ) of the first sliding set (6) of the first inner tube (3);
- calculating (S₃) the distance from at least one mounting position for a sliding element (6₁, 6₂) on the outer wall (8) of the first inner tube (3) to the adjacent inner wall (10) of the outer tube (2);
- adjusting (S₄) the material thickness of the sliding element (6₁, 6₂, ..., 6ₙ) of the first sliding set (6) by:
a) reducing or removing the material thickness of the sliding element (6₁, 6₂, ..., 6ₙ) of the first sliding set (6) until the sliding element (6₁, 6₂, ..., 6ₙ) of the first sliding set (6) has a material thickness that corresponds to the calculated distance; or
b) increasing or building up the material thickness of the sliding element (6₁, 6₂, ..., 6ₙ) of the first sliding set (6) until the sliding element (6₁, 6₂, ..., 6ₙ) of the first sliding set (6) has a material thickness that corresponds to the calculated distance,
and
- in the method step of detecting (S₁) the inner diameter, the inner diameter and/or inner dimension is detected by means of a capacitive or inductive measuring system (80) or using a laser unit, wherein the capacitive or inductive measuring system (80) or the laser unit is inserted into the outer tube (2).

15. Method for producing a custom-made sliding element (6₁, 6₂, ..., 6ₙ) according to any of claims 11 to 14, **characterised by** the following feature:
- in the adjustment method step (S₄), the material thickness of the sliding element (6₁, 6₂, ..., 6ₙ) is reduced by means of a milling process and/or grinding process or built up by means of a three-dimensional printing process.

## Revendications

1. Colonne télescopique (1) comportant un tube extérieur (2) et au moins un premier tube intérieur (3), dans laquelle ledit au moins un premier tube intérieur (3) est mobile de manière télescopique par rapport au tube extérieur (2), et ledit au moins un premier tube intérieur (3) est équipé d'un palier coulissant (5), comprenant les éléments suivants:
- un premier ensemble coulissant (6) comprenant plusieurs éléments coulissants (6₁, 6₂, ..., 6ₙ) qui sont disposés entre le premier tube intérieur (3) et le tube extérieur (2) dans la direction circonférentielle sur la paroi extérieure (8) du premier tube intérieur (3), par lequel les deux tubes (2, 3) sont guidés de manière à pouvoir se déplacer longitudinalement l'un par rapport à l'autre;
- les éléments coulissants (6₁, 6₂, ..., 6ₙ) du premier ensemble coulissant (6) sont fixés ou rapportés au premier tube intérieur (3);
- les éléments coulissants (6₁, 6₂, ..., 6ₙ) du premier ensemble coulissant (6) présentent des surfaces de coulissement (9) qui sont en contact avec la paroi intérieure (10) du tube extérieur (2);
- au moins une partie ou la totalité des éléments coulissants (6₁, 6₂, ..., 6ₙ) sont fabriqués sur mesure et présentent, adaptée à une épaisseur de matériau prédéterminée,
a) une surface d'appui et/ou de coulissement (9) usinée, fraisée et/ou rectifiée, ou
b) une surface d'appui et/ou de coulissement (9) construite et/ou imprimée au moyen d'une imprimante 3D,
l'épaisseur de matériau prédéterminée étant choisie de telle sorte que le jeu de mouvement du premier tube intérieur (3) par rapport au tube extérieur (2) soit inférieur à une valeur seuil ou, de préférence, qu'il soit sans jeu;
**caractérisée par** les éléments suivants:
- le premier tube intérieur (3) présente en direction circonférentielle plusieurs ouvertures de codage (61) espacées les unes des autres dans une première rangée (60);
- au moins quelques-unes des ouvertures de codage (61) de la première rangée (60) diffèrent de par leur forme et/ou leur taille;
- au moins quelques-uns des éléments coulissants (6₁, 6₂, ..., 6ₙ) du premier ensemble coulissant (6) sont munis de saillies de codage (50₁, 50₂, ... 50ₙ);
- les saillies de codage (50₁, 50₂, ... 50ₙ) des éléments coulissants (6₁, 6₂, ..., 6ₙ) du premier ensemble coulissant (6) correspondent, en ce qui concerne leur forme, leur taille et/ou la possibilité d'être insérées dans des ouvertures de codage associées (61), à la forme et à la taille des ouvertures de codage respectives (61) de la première rangée (60), de telle sorte que les éléments coulissants (6₁, 6₂, ..., 6ₙ) du premier ensemble coulissant (6) ne sont fixées ou ne peuvent être fixés à la paroi extérieure (8) du premier tube intérieur (3) dans la direction circonférentielle qu'aux positions de montage qui leur sont destinées.

2. Colonne télescopique selon la revendication 1,
**caractérisée en ce que**
le palier coulissant (5) présente les éléments suivants:
- la forme en coupe transversale des ouvertures de codage (61, 62) et/ou des saillies de codage (50₁, 50₂, ... 50ₙ et 51₁, 51₂, ... 51ₙ) correspond, en vue de dessus, à
a) un cercle; ou à
b) un ovale; ou à
c) un triangle; ou à
d) un rectangle; ou à
e) un carré; ou à
f) un trapèze; ou à
g) un croissant; ou à
h) un hexagone; ou à
i) une lettre; ou à
j) un ornement; ou à
k) un polygone régulier ou irrégulier à n côtés;
ou en est proche.

3. Colonne télescopique selon la revendication 1 ou 2,
**caractérisée en ce que**
le palier coulissant (5) présente les éléments suivants:
- d'autres ouvertures de codage (62) disposées en direction circonférentielle sont ménagées dans au moins une deuxième rangée (63) sur le premier tube intérieur (3) en étant espacées en direction longitudinale des ouvertures de codage (61) de la première rangée (60) disposées en direction circonférentielle;
- au moins quelques-unes des ouvertures de codage (62) de la deuxième rangée (63) diffèrent les unes des autres de par leur forme et/ou leur taille;
- un deuxième ensemble coulissant (7) qui comprend plusieurs éléments coulissants (7₁, 7₂, ..., 7ₙ) qui sont disposés en direction circonférentielle sur la paroi extérieure (8) du premier tube intérieur (3) entre le premier tube intérieur (3) et le tube extérieur (2), permettant de guider les deux tubes (2, 3) de façon mobile en translation longitudinale l'un par rapport à l'autre;
- au moins quelques-uns des éléments coulissants (7₁, 7₂, ..., 7ₙ) du deuxième ensemble coulissant (7) sont munis de saillies de codage (51₁, 51₂, ... 51ₙ);
- les saillies de codage (51₁, 51₂, ... 51ₙ) des éléments coulissants (7₄, 7₂, ..., 7ₙ) du deuxième ensemble coulissant (7) correspondent, en ce qui concerne leur forme, leur taille et/ou la possibilité d'être insérées dans des ouvertures de codage associées (62), à la forme et à la taille des ouvertures de codage respectives (62) de la deuxième rangée (63), de telle sorte que les éléments coulissants (7₁, 7₂, ..., 7ₙ) du deuxième ensemble coulissant (7) ne sont fixés ou ne peuvent être fixés à la paroi extérieure (8) du premier tube intérieur (3) dans la direction circonférentielle qu'aux positions de montage qui leur sont destinées.

4. Colonne télescopique selon la revendication 3,
**caractérisée en ce que**
le palier coulissant (5) présente les éléments suivants:
- les éléments coulissants (6₁, 6₂, ..., 6ₙ) du premier ensemble coulissant (6) se distinguent les uns des autres, en vue de dessus, par au moins une première caractéristique de distinction; et/ou
- les éléments coulissants (7₁, 7₂, ..., 7ₙ) du deuxième ensemble coulissant (7) se distinguent les uns des autres, en vue de dessus, par au moins la première caractéristique de distinction; et/ou
- les éléments coulissants (6₁, 6₂, ..., 6ₙ) du premier ensemble coulissant (6) se distinguent des éléments coulissants (7₁, 7₂, ..., 7ₙ) du deuxième ensemble coulissant (7), en vue de dessus, par au moins une deuxième caractéristique de distinction.

5. Colonne télescopique selon la revendication 4,
**caractérisée en ce que**
le palier coulissant présente les éléments suivants:
- la première caractéristique de distinction est
a) un symbole, de préférence un numéro ou une lettre, qui est fraisé ou gravé dans la surface de coulissement (9) des éléments coulissants (6₁, 6₂, ..., 6ₙ et 7₁, 7₂, ..., 7ₙ) du premier et/ou deuxième ensemble coulissant (6, 7); et/ou
b) une couleur; et/ou
- la deuxième caractéristique de distinction est
a) un symbole, de préférence un numéro ou une lettre, qui est fraisé ou gravé dans la surface de coulissement (9) des éléments coulissants (6₁, 6₂, ..., 6ₙ et 7₁, 7₂, ..., 7ₙ) du premier et du deuxième ensemble coulissant (6, 7); et/ou
b) une couleur; et/ou
c) une autre forme, de préférence une ailette (45) en saillie qui est réalisée sur les éléments coulissants (6₁, 6₂, ..., 6ₙ et 7₁, 7₂, ..., 7ₙ) du premier ou du deuxième ensemble coulissant (6, 7).

6. Colonne télescopique selon l'une des revendications 3 à 5,
**caractérisée par** les éléments suivants:
a) le tube extérieur (2) et le tube intérieur (3) présentent une section transversale ronde, et les éléments coulissants (6₁, 6₂, ..., 6ₙ et 7₁, 7₂, ..., 7ₙ) du premier et/ou du deuxième ensemble coulissant (6, 7) sont disposés en direction circonférentielle en répartition régulière sur la paroi extérieure (8) du premier tube intérieur (3); ou
b) le tube extérieur (2) et le tube intérieur (3) présentent une section transversale polygonale à n angles avec n ≥ 3, de préférence n ≥ 4; et sur chacune des n faces latérales (20₁, ... 20ₙ) du premier tube intérieur (3), au moins un élément coulissant (6₁, 6₂, ..., 6ₙ et 7₁, 7₂, ..., 7ₙ) du premier et/ou du deuxième ensemble coulissant (6, 7), de préférence deux ou plusieurs éléments coulissants (6₁, 6₂, ..., 6ₙ et 7₁, 7₂, ..., 7ₙ) du premier et/ou du deuxième ensemble coulissant (6, 7) décalés les uns des autres en direction circonférentielle sont disposés en direction circonférentielle.

7. Colonne télescopique selon la revendication 6,
**caractérisée en ce que** le palier coulissant (5) présente les éléments suivants:
- deux éléments coulissants (6₁, 6₂, ..., 6ₙ) du premier ensemble coulissant (6) disposés sur deux faces latérales voisines (20₁, ..., 20ₙ) font partie d'un angle de coulissement commun (40₁, 40₂, ... 40ₙ) du premier ensemble coulissant (6); et/ou
- deux éléments coulissants (7₁, 7₂, ..., 7ₙ) du deuxième ensemble coulissant (7) disposés sur deux faces latérales voisines (20₁, ..., 20ₙ) font partie d'un angle de coulissement commun (41₁, 41₂, ... 41ₙ) du premier ensemble coulissant (7).

8. Colonne télescopique selon la revendication 7,
**caractérisée en ce que** le palier coulissant (5) présente les éléments suivants:
- l'angle de coulissement (40₁, 40₂, ... 40ₙ et 41₁, 41₂, ... 41ₙ) du premier ensemble coulissant (6) et/ou du deuxième ensemble coulissant (7) présente deux branches (43₁, 43₂),
- deux surfaces intérieures (52) des deux branches (43₁, 43₂) sont en appui contre deux faces latérales voisines (20₁, ..., 20ₙ);
- la saillie de codage (50₁, 50₂, ... 50ₙ et 51₁, 51₂, ... 51ₙ) est réalisée sur une ou sur les deux surfaces intérieures (52) des branches;
- une surface de coulissement respective (9) est réalisée sur les deux surfaces extérieures des deux branches (43₁, 43₂).

9. Colonne télescopique selon l'une des revendications précédentes, **caractérisée par** les éléments suivants:
- au moins un deuxième tube intérieur (4) dont le diamètre est plus petit que le diamètre du premier tube intérieur (3);
- le deuxième tube intérieur (4) comprend un palier coulissant (5) qui présente les éléments du palier coulissant selon l'une des revendications précédentes, l'épaisseur du matériau des éléments coulissants individuels (6₁, 6₂, ..., 6ₙ et 7₁, 7₂, ..., 7ₙ) étant adaptée à la distance entre le deuxième tube intérieur (4) et le premier tube intérieur (3), de sorte qu'un jeu de mouvement du deuxième tube intérieur (4) par rapport au premier tube intérieur (3) est, en direction transversale et en direction longitudinale, inférieur à une valeur seuil définie, de préférence sans jeu, sur tout le chemin de déplacement (68) de la colonne télescopique (1);
- le premier tube intérieur (3) et le deuxième tube intérieur (4) sont montés de façon mobile en translation télescopique l'un par rapport à l'autre par l'intermédiaire du palier coulissant (5) du deuxième tube intérieur (4).

10. Colonne télescopique selon la revendication 9,
**caractérisée par** l'élément suivant:
- les éléments coulissants (6₁, 6₂, ..., 6ₙ et 7₁, 7₂, ..., 7ₙ) du palier coulissant (5) du deuxième tube intérieur (4) se distinguent de par leur épaisseur de matériau des éléments coulissants (6₁, 6₂, ..., 6ₙ et 7₁, 7₂, ..., 7ₙ) du palier coulissant (5) du premier tube intérieur (3); et/ou
- les éléments coulissants (6₁, 6₂, ..., 6ₙ et 7₁, 7₂, ..., 7ₙ) du palier coulissant (5) du deuxième tube intérieur (4) se distinguent par
a) un symbole, de préférence un numéro ou une lettre, qui est injecté, fraisé ou gravé dans la surface de coulissement (9) des éléments coulissants (6₁, 6₂, ..., 6ₙ et 7₁, 7₂, ..., 7ₙ); et/ou
b) leur couleur; et/ou
c) une forme des éléments coulissants (6₁, 6₂, ..., 6ₙ et 7₁, 7₂, ..., 7ₙ) du palier coulissant (5) du premier tube intérieur (3).

11. Procédé de réalisation d'un élément coulissant (6₁, 6₂, ..., 6ₙ) fabriqué sur mesure pour une colonne télescopique (1) selon l'une des revendications précédentes, le procédé comprenant les étapes suivantes consistant à:
- détecter (S₁) un diamètre intérieur ou une dimension intérieure du tube extérieur (2) sur le chemin de déplacement (68) de l'élément coulissant (6₁, 6₂, ..., 6ₙ) du premier ensemble coulissant (6) du premier tube intérieur (3);
- détecter (S₂) le diamètre extérieur ou une dimension intérieure du tube intérieur (3) au moins au niveau de la position de montage de l'élément coulissant (6₁, 6₂, ..., 6ₙ) du premier ensemble coulissant (6) du premier tube intérieur (3);
- calculer (S₃) la distance entre au moins une position de montage pour un élément coulissant (6₁, 6₂) sur la paroi extérieure (8) du premier tube intérieur (3) et la paroi intérieure adjacente (10) du tube extérieur (2);
- adapter (S₄) l'épaisseur du matériau de l'élément coulissant (6₁, 6₂, ..., 6ₙ) du premier ensemble coulissant (6) par:
a) réduction ou enlèvement de l'épaisseur du matériau de l'élément coulissant (6₁, 6₂, ..., 6ₙ) du premier ensemble coulissant (6), jusqu'à ce que l'élément coulissant (6₁, 6₂, ..., 6ₙ) du premier ensemble coulissant (6) présente une épaisseur qui correspond à la distance calculée; ou
b) augmentation ou agrandissement de l'épaisseur du matériau de l'élément coulissant (6₁, 6₂, ..., 6ₙ) du premier ensemble coulissant (6), jusqu'à ce que l'élément coulissant (6₁, 6₂, ..., 6ₙ) du premier ensemble coulissant (6) présente une épaisseur qui correspond à la distance calculée;
et
- dans l'étape du procédé consistant à adapter (S4), l'épaisseur du matériau de l'élément coulissant (6₁, 6₂, ..., 6ₙ) est réduite ou augmentée à une valeur cible, la valeur cible étant la plus petite distance sur le chemin de déplacement (68) entre la paroi extérieure (8) du premier tube intérieur (3) dans la position de montage de l'élément coulissant (6₁, 6₂, ..., 6ₙ) et la paroi intérieure adjacente (10) du tube extérieur (2).

12. Procédé de réalisation d'un élément coulissant (6₁, 6₂, ..., 6ₙ) fabriqué sur mesure pour une colonne télescopique (1) selon l'une des revendications 1 à 10, le procédé comprenant les étapes suivantes consistant à:
- détecter (S₁) un diamètre intérieur ou une dimension intérieure du tube extérieur (2) sur le chemin de déplacement (68) de l'élément coulissant (6₁, 6₂, ..., 6ₙ) du premier ensemble coulissant (6) du premier tube intérieur (3);
- détecter (S₂) le diamètre extérieur ou une dimension intérieure du tube intérieur (3) au moins dans la position de montage de l'élément coulissant (6₁, 6₂, ..., 6ₙ) du premier ensemble coulissant (6) du premier tube intérieur (3);
- calculer (S₃) la distance entre au moins une position de montage pour un élément coulissant (6₁, 6₂) sur la paroi extérieure (8) du premier tube intérieur (3) et la paroi intérieure adjacente (10) du tube extérieur (2);
- adapter (S₄) l'épaisseur du matériau de l'élément coulissant (6₁, 6₂, ..., 6ₙ) du premier ensemble coulissant (6) par:
a) réduction ou enlèvement de l'épaisseur du matériau de l'élément coulissant (6₁, 6₂, ..., 6ₙ) du premier ensemble coulissant (6), jusqu'à ce que l'élément coulissant (6₁, 6₂, ..., 6ₙ) du premier ensemble coulissant (6) présente une épaisseur qui correspond à la distance calculée; ou
b) augmentation ou agrandissement de l'épaisseur du matériau de l'élément coulissant (6₁, 6₂, ..., 6ₙ) du premier ensemble coulissant (6), jusqu'à ce que l'élément coulissant (6₁, 6₂, ..., 6ₙ) du premier ensemble coulissant (6) présente une épaisseur qui correspond à la distance calculée;
et
- dans l'étape de procédé consistant à adapter (S₄), la somme de l'épaisseur du matériau de deux éléments coulissants (6₁, 6₂, ..., 6ₙ) qui sont montés sur deux surfaces latérales (20₁, ... 20ₙ) mutuellement parallèles du premier tube intérieur (3) est réduite ou augmentée à une valeur cible, la valeur cible étant la somme de la plus petite distance des deux surfaces latérales (20₁, ... 20ₙ) mutuellement parallèles du premier tube intérieur (3) et la paroi intérieure respective (10) du tube extérieur (2) sur le chemin de déplacement (68).

13. Procédé de réalisation d'un élément coulissant (6₁, 6₂, ..., 6ₙ) fabriqué sur mesure selon la revendication 12, **caractérisé par** l'élément suivant:
- l'épaisseur du matériau de deux éléments coulissants (6₁, 6₂, ..., 6ₙ) qui sont montés sur deux surfaces latérales (20₁, ... 20ₙ) mutuellement parallèles du premier tube intérieur (3) est de même taille.

14. Procédé de réalisation d'un élément coulissant (6₁, 6₂, ..., 6ₙ) fabriqué sur mesure pour une colonne télescopique (1) selon l'une des revendications 1 à 10, le procédé comprenant les étapes suivantes consistant à:
- détecter (S₁) un diamètre intérieur ou une dimension intérieure du tube extérieur (2) de préférence sur le chemin de déplacement (68) de l'élément coulissant (6₁, 6₂, ..., 6ₙ) du premier ensemble coulissant (6) du premier tube intérieur (3);
- détecter (S₂) le diamètre extérieur ou une dimension extérieure du tube intérieur (3) au moins dans la position de montage de l'élément coulissant (6₁, 6₂, ..., 6ₙ) du premier ensemble coulissant (6) du premier tube intérieur (3);
- calculer (S₃) la distance entre au moins une position de montage pour un élément coulissant (6₁, 6₂) sur la paroi extérieure (8) du premier tube intérieur (3) et la paroi intérieure adjacente (10) du tube extérieur (2);
- adapter (S₄) l'épaisseur du matériau de l'élément coulissant (6₁, 6₂, ..., 6ₙ) du premier ensemble coulissant (6) par:
a) réduction ou enlèvement de l'épaisseur du matériau de l'élément coulissant (6₁, 6₂, ..., 6ₙ) du premier ensemble coulissant (6), jusqu'à ce que l'élément coulissant (6₁, 6₂, ..., 6ₙ) du premier ensemble coulissant (6) présente une épaisseur qui correspond à la distance calculée; ou
b) augmentation ou agrandissement de l'épaisseur du matériau de l'élément coulissant (6₁, 6₂, ..., 6ₙ) du premier ensemble coulissant (6), jusqu'à ce que l'élément coulissant (6₁, 6₂, ..., 6ₙ) du premier ensemble coulissant (6) présente une épaisseur qui correspond à la distance calculée; et
- dans l'étape du procédé consistant à détecter le diamètre intérieur (S₁), le diamètre intérieur ou la dimension intérieure est détecté(e) au moyen d'un système de mesure capacitif ou inductif (80) ou au moyen d'une unité à laser, le système de mesure capacitif ou inductif (80) ou l'unité à laser étant immergé(e) dans le tube extérieur (2).

15. Procédé de réalisation d'un élément coulissant (6₁, 6₂, ..., 6ₙ) fabriqué sur mesure selon l'une des revendications 1 à 14, **caractérisé par** l'élément suivant:
- dans l'étape du procédé consistant à adapter (S₄), l'épaisseur du matériau de l'élément coulissant (6₁, 6₂, ..., 6ₙ) est réduite par un processus de fraisage et/ou par un processus de rectification ou est augmentée par un processus d'impression tridimensionnelle.
